Europäisches Patentamt

European Patent Office

Office européen des brevets

(11) Veröffentlichungsnummer: **0 318 718**
**A1**

(12) **EUROPÄISCHE PATENTANMELDUNG**

(21) Anmeldenummer: 88118365.1

(22) Anmeldetag: 04.11.88

(51) Int. Cl.4: **H04N 7/13 , H04N 7/137**

Die Bezeichnung der Erfindung wurde geändert
(Richtlinien für die Prüfung im EPA, A-III, 7.3).

(30) Priorität: 11.11.87 DE 3738244
11.03.88 EP 88103905
07.06.88 EP 88109025
23.08.88 EP 88113671

(43) Veröffentlichungstag der Anmeldung:
07.06.89 Patentblatt 89/23

(84) Benannte Vertragsstaaten:
AT BE CH DE ES FR GB IT LI NL SE

(71) Anmelder: **Kehler, Waldemar, Dipl.-Ing.**
**Silcherstrasse 20**
**D-7204 Wurmlingen(DE)**

(72) Erfinder: **Kehler, Waldemar, Dipl.-Ing.**
**Silcherstrasse 20**
**D-7204 Wurmlingen(DE)**

(54) **Generalisiert Bereichsprädiktives Code-Modulations-Verfahren für Signalmengen.**

(57) GENERALISIERT BEREICHSPRÄDIKTIVES CODE-MODULATIONS-VERFAHREN FÜR SIGNALMENGEN mit Bereichs-Schachtelung top-down (KONVERGENZ-PRINZIP von CAUCHY) und bottom-up zur sukzessiv bereichsabhängig schärferen längenreduzierten Codierung des (mehrdimensionalen) Funktions-Adress-Raumes, unter Verwendung der Bereiche von Signalen, Differenzen, Vektoren, Prädikaten, Unschärfen, relativen Offsets und Codelängen-Prädiktion.

Eine AUFGABE DER ERFINDUNG ist die PCM-Codierung mit ganz erheblich reduzierter Datenrate und gegenüber konventionellen Verfahren möglichst einfachen Operationen. MEGA-CHIPS gestatten dazu die Bildung mehrdimensionaler (räumlicher, Differenzen-) Bild-Blöcke einer beschränkten SIGNALMENGE S zur WISSENSBASIERTEN VERARBEITUNG:

A) Beschränkte SIGNAL-BEREICHE, speziell Bildgebiete, benötigen zwischen MINIMUM und MAXIMUM nur eine bereichsabhängige CODE-LÄNGE, die für sukzessiv kleinere Bereiche gegen (PCM-)Minimal-Codes, bis hin zur Länge Null (IRRELEVANZ-BEREICHE), konvergiert. Das Prinzip erlaubt erstmals eine längenreduzierte PCM.

B) In DIFFERENZEN-BEREICHEN unterliegen codierte Teilmengen zwischen Gradienten-Nulldurchgängen SUKZESSIVER EXKLUSION und die Beschränkung des CAHCHY-Verfahrens auf planare oder z-Differenzen verbessert die BPCM zur DBPCM (Automaten-Sehen!).

C) Differenz- und Vergleichs-Operationen genügen und sind um Zehnerpotenzen schneller als die komplexen Rechenoperationen konventioneller Reduktions-Verfahren, die in meist REDUZIERTEN BEREICHEN, mit weiteren Vorteilen, geschaltet anwendbar bleiben! Die prinzipbedingte Konvergenz erlaubt Hochgeschwindigkeits-Verarbeitung und höchste Auflösung. Extrema müssen nicht mehr präcodiert werden. Eine Anwendung für HDTV, SCHMALBAND-ISDN, BILD-ANALYSEN und AI-SYSTEME ist leicht normierbar.

Ic)

IId)

## GENERALISIERT BEREICHSPRÄDIKTIVES CODE-MODULATIONS-VERFAHREN FÜR SIGNALMENGEN mit Bereichs-Schachtelung top-down (KONVERGENZ-PRINZIP von CAUCHY) und bottom-up zur sukzessiv bereichsabhängig schärferen längenreduzierten Codierung des (mehrdimensionalen) Funktions-Adress-Raumes, unter Verwendung der Bereiche von Signalen, Differenzen,Vektoren,Prädikaten,Unschärfen,relativen Offsets und Codelängen-Prädiktion.

### I) EINLEITUNG

G 1: Jede abgeschlossene reale (Signal-)Menge S enthält ihre EXTREMA. Signale jeder Art werden (implizit) in einer Absolut-Skala gemessen. Bei Analog-Signalen ist dies der BEREICH der absoluten (maximalen) Amplituden, Frequenzhübe, Phasen oder Verschiebungen, bei digitalen die volle PCM-Skala. Letztere enthält für einen Bildpunkt z.B. 256 Stufen, einem Byte entsprechend. Für beschränkte Signalbereiche EB von S benötigt man selten diese volle Skala: Jede signalgegebene oder willkürliche Segmentierung legt die erforderlichen, gegenüber der Absolutskala fast stets reduzierten, Skalen fest. Ihre EXTREMA (MIN, MAX) sind z.B. mit Vergleichern oder Mikroprogrammen rasch feststellbar.
- vgl. Abb. la,b: EM1,EM2, EM21,EM22

G 2: Bei sukzessiver Anwendung (Bereichs-Schachtelung) benötigt man folglich auch sukzessiv kleinere Codelängen, da jeder Teilbereich EB1(i), i = 1,2,3.., im Primärbereich EB1 enthalten ist. Reale,Korrelationen enthaltende Funktionen, konvergieren in abgeschlossenen Bereichen gegen die dort minimal erforderliche Skala (vgl. math. KONVERGENZ-PRINZIP VON CAUCHY): Durch sukzessive Anwendung werden diese Skalen meist irrelevant klein, Das Verfahren konvergiert gegen IRRELEVANZ-BEREICHE (Skalenweite = O) für ganze Bildgebiete mit (sehr) vielen Punkten. Eine irrelevante Punktmenge wird mit NULL-BIT-PCM-CODES codierbar und bedarf also keiner Übertragung, d.h. ein einziger STÜTZWERT der Menge genügt!
- vgl. kleine Abb. Ib: EM21 = HP1 usw.

G 3: Bildfolgen lassen sich als dreidimensional geschichtete KÖRPER in x,y,z ansehen (Abb.Ic,IIc), als INFORMATIONS-KÖRPER IK, die sich in physische Sub-Blöcke beliebiger Größe und Form (Rechtecke, Zylinder längs der z-Achse) segmentieren lassen. Jeder IK ist transformations-invariant! Daraus folgt: Sendeseitig ist zwar ein feines ABTAST-RASTER in jeder Koordinate sinnvoll , die Anwendung o.g. Prinzipien führt aber zu immer kleineren erforderlichen Skalen, also PCM-Codelängen. Die Übertragung der Teilmengen-Extrema bis hin zu jedem PCM-WERT in der reduzierten Skala genügt zur punktgenauen Rekonstruktion des IK.

G 4: Ein bereits codiertes und übertragenes Bild bedarf keiner weiteren Codes. Die Mitteilung einer INVARIANZ mit einem einzigen bit (=true/false) veranlaßt den Empfänger, die Information aus der Vergangenheit auch für die Gegenwart einzusetzen. Ein stationäres TV-Testbild wird dann nicht mehr neu übertragen. Dies entspricht einem in der z-Achse sehr langen invarianten IK. der top-down, als Raum-Block geschachtelt, übertragbar wird. Bewegte Objekte ändern sich dagegen von Bild zu Bild und bedürfen erneuter Codierung.
- Abb.Ic: Raumblock, Abb. IIb Bildfolge, s. großen/kleinen Pfeil

G 5: Zwischen je zwei benachbarten RELATIVEN EXTREMA (Min-R, Max-R) ist f(t) stetig nicht fallend! - Daraus folgt: Ist ein TEILBEREICH dazwischen komplett codiert, so ist er für die restlichen Punkte von S ausgeschlossen, also für alle übrigen Punkte ein LEERE RESTMENGE, in der kein weiterer Punkt liegt. Ist z.B. eine monoton steigende unscharfe Sprung-Funktion S in der unteren Hälfte codiert (EM1), so verbleibt nur noch der Skalenbereich EM2 = EM - EM1, was zur Reduktion der erforderlichen Skala und oft auch der Codelänge führt.
- vgl. Abb. la

G 6: RELATIVE EXTREMA jeder Originalfunktion S werden durch Nulldurchgänge ihrer Differentiale mathematisch lokalisiert. Jede gerichtete Punkt-zu-Punkt-Differenz im Raum führt zu einem solchen Differential, der GRADIENTEN-FUNKTION G in einer bestimmten Richtung. In der z-Achse entsteht dabei anschaulich das DIFFERENZEN-BILD D zwischen Bild Nr. i und Bild i+1. Diese Folge von Differenz-Bildern D(z) verhält sich äquivalent zum vorigen IK. Dieser Differenzenblock DIK(z) sei hier GIK(z) genannt, da er aus dem Z-Gradienten G(z) entsteht.

G 7: Die X- und Y-Gradienten G(x) und G(y) längs einer Bild-Zeile bzw. -Spalte liefern eine Art Karrikatur, denn Bild-Konturen zeigen die höchsten Werte dieser beiden PLANAREN GRADIENTEN. Sie eignen sich daher zur einfachen (IR-) RELEVANZ-SELEKTION (I/R). Sukzessives Nesting führt dann zur Kontur-Selektion.
- vgl. Abb. IIa: Gebiete I und R

G 8: Ist die Bild-zu-Bild-Änderung gering, so bedarf es nur einer Übertragung der Änderung in einer abschätzbar kleineren Skala. Das als DELTA-MODULATION bekannte Grundprinzip versagt bei der Codierung extremer Änderungen.

Verwendet man dagegen das CAUCHY-Prinzip zur Differenzen-Codierung, so führt die sukzessive Bereichs- bzw. Intervall-Schachtelung zur genauen Rekonstruktion des nächsten Bildes. Allgemein läßt sich ein Informationskörper IK(2) aus IK(1) nun durch Codierung eines DIFFERENZEN-INFORMATIONSKÖRPERS DIK(1,2) aufbauen,

$$\text{denn wegen der Definition} \quad DIK(2,1) = IK(2) - IK(1)$$

$$\text{folgt für } IK(2) \quad IK(2) = IK(1) + DIK(2,1) \quad \text{(Superposition)}$$

Die Codierung eines DIK erweist sich bei geringer Änderung als sinnvoll. Erstaunlicherweise wurden diese Gesetzmäßigkeiten bisher wenig genutzt!

## II) STAND DER TECHNIK

## 1. Gängige Verfahren

### 1.1. Puntweise Bild-Analyse, PCM-Verfahren, Digitales Fernsehen

- BILD-ANALYSEN ordnen nach aufwendiger punktweiser Analyse die Punktelemente in MUSTER-MENGEN ein. Eine sukzessive Muster-Auflösung wäre erwünscht.

- Beim PULS-CODE-MODULATIONS-VERFAHREN (PCM) wird eine zweckmäßig gewählte Abtastrate Punkt für Punkt digital in einer MAXIMAL-SKALA von z.B.255 Werten codiert und als 8-bit-Wort übertragen. Der Datenstrom ist dadurch sehr hoch.

- Die neue TV-Norm MAC (MULTIPLEXED ANALOG COMPONENTS)benötigt eine Bandbreite von 13,5 Mhz. Selbst unter Berücksichtigung einer erniedrigten Farbauflösung gegenüber dem Luminanzsignal benötigt man in PCM-Technik noch 140 Mbit/s.

- Hochauflösendes Fernsehen (HDTV) ohne Datenreduktion mit doppelter Zeilen-und Spalten-Auflösung erfordert dann ca. 0,5 Gigabit/s. Wegen der beschränkt verfügBaren Satelliten-Frequenzen sind also DATEN-REDUKTIONS-METHODEN nötig!

### 1.2 DELTA-MODULATION: DPCM und VERSCHIEBUNGS-CODIERUNG VON PUNKTEN (OBJEKTEN)

- Durch punktuelle Prädiktionen versuchte man, kleinere Skalen zu erreichen indem man jede einzelne Punkt-Umgebung (statistisch) auswertete und nur die Abweichung als Offset-Code von einer Schätzung codierte (DPCM).

- Wie bei jener Amplituden-DPCM werden sendeseitig gemessene VERSCHIEBUNGEN in gegenüber dem vollen X-Y-Adressraum stark reduzierten Skalen übertragen. Diese Objekt-Verschiebungen sind heute sehr genau über Objekt-Korrelationen als X-Y-VERSCHIEBUNGS-VEKTOR meßbar.

Die CCIR Study Group sieht dafür ca.25 kB Speicher vor (IWP CMTT/2, 10.3.88). Für hohe OFFSETS reicht die Codierskala jeweils nicht mehr aus (slope overload). Bei Wasserwellen, Feuer, usw. ist auch garkein sinnvolles Objekt, noch weniger dessen punktörmiger(!) Verschiebungs-Vektor mehr meßbar.

### 1.3. Die TRANSFORMATIONS-CODIERUNG, COSINUS-TRANSFORMATION VON BEREICHEN

Ein Bild-Bereich, z.B. 8x8 bis 64.64 Punkte wird nach FOURIER transformiert, als blockweise orthogonale Zerlegung der planaren Bild-Funktion in ihr Spektrum in Form der ADAPTIVEN COSINUS-TRANSFORMATION (ACT), die psycho-visuelle Vergröberungen und Weglassungen erlaubt. Sie wurde von der Gruppe ESPRIT-563-PICA als bestes Verfahren zur Festbild-Codierung ausgewählt, da es bereits unterhalb von 1bit.pel Details gut auflöst. Es ist rechenaufwendig und die Koeffizienten-Matrix wird dabei immer noch in der vollen Skala codiert.

## 2. Bereichsprädiktive Datenreduktion

### 2.1. Relevante Punkte, DOPPEL-PRÄDIKTION (DP) der Extrema

Man kann beliebige RELEVANTE PUNKTE, speziell die Extrema (Min.; Max.) eines BEREICHS auf vorbekannte Weise messen, was die Bereichsweite festlegt. Diese Bereiche sind direkt präcodierbar oder als quasikonventionelle Prädiktionen, hier z.B. als spezielle DOPPEL-PRÄDIKTION DP = (MIN.; MAX) oder (Min.; Offset bis Max.), definierbar. Äquivalent sind: Mittelwert, Streuung. Die Signalmenge liegt ganz in diesem (linearen) BEREICH, ist dann also direkt darin codierbar.
- Abb.IIe: absolute u.relative Extrema

### 2.2 BPCM: Die bereichsabhängige minimale Codelänge - EP-0091979-B1 (W.Kehler)

An der Weite infrage kommender Bereiche orientiert sich die nötige Codelänge. Die EP-0091979-B1 (Abk. BPCM, patentiert) nutzt die WEITE quasistetiger Bereiche FÜR SIGNALWERTE einer Signalmenge, speziell zwischen ermitteltem MINIMUM und MAXIMUM zur Skalenreduktion. Das ergibt sich aus I, G1 u. G2: Für einen (möglichst groß gewählten) Initial-Bereich, werden einem Empfänger die EXTREMA E(1,2) = P(min), P(max), z.B. mit zwei PCM-Codes, so präcodiert, daß sie alle Werte enthalten. Codierte Bereiche sind für die Zukunft auch abschätzbar.

### 2.2.1 CAUCHY-PRINZIP: Hierarchische BEREICHS-PRÄDIKTION(BP), Codelängen-Reduktion

Das CAUCHY-Prinzip impliziert die hierarchisch bereichsweise Sukzession im EB: Jede Teilmenge S(i) und alle Werte darin, sind, z.B. mit P(min) als Nullpunkt von S(i), in der reduzierten Skala bis P(max) codierbar. So kann man sukzessiv top-down fortfahren, speziell mit der Teilmenge S(i,j) innerhalb S(i), usw, mit i = 1,2,3.., notfalls bis hin zum Punkt. Alle Untermengen, bis zum Punkt, müssen in zutreffenden Bereichsaussagen (Skalen) enthalten sein. Varianten des Verfahrens wurden später "hierarchisch" und "rekursiv" genannt. Prinzipbedingt nutzen sie das CAUCHY-PRINZIP (INKLUSIONS-,KONVERGENZ-PRINZIP) der BPCM, also für sukzessiv kleinere Punktmengen die sukzessiv kleineren Skalenbereiche.
- vgl. Abb. Ia,b, IId,e

### 2.3. Punktuelle Entartung, DE-3020061-C2 (W.K.) und EP-01411127 (Siemens)

Die Konvergenz (unterste Stufe des CAUCHY-Prinzips) entartet in der Bereichs-Aussage für einen Ort (X,Y) in punktueller MEHRFACH-PRÄDIKTION. Dies ist in der DE-3020061-C2 (Mehrfach adaptive DPCM, Abk. MADPCM) und EP-0141127 patentiert. Die Sprungrichtung und der potentielle OFFSET, äqquivalent: Skalenweite Max-Min einer Punktmenge (=DP!) sind aus der Vergangenheit der Umgebung etwa bekannt.

## 3. Realisierte Anwendungen der BPCM

### 3.1. Interpolation als Erwartungsmenge EM einer BPCM

Die BPCM läßt jede Signalmenge S zur Anwendung des Prinzips zu. So kann jede beschränkte Menge (der Vergangenheit gemäß BPCM, dort: Pkt. I,2.1., 3.1 und 4.9 als Erwartungsmenge-Menge EM zugelassen sein, was die FORM der Funktion impliziert. Im Kap.II,Pkt. 3 der BPCM wird explizit die Möglichkeit angegeben, prädiktive Verfahren zwischen STÜTZWERTEN quasi interpolierend anzuwenden, um eine besonders geeignete Form des Verfahrens zu finden. Lineare Interpolation, speziell in einem Rechteck, ist dabei natürlich die nächstliegende Art.

4

### 3.2. Eine spezielle funktionale Inversion der sukzession BPCM

Eine in der BPCM (II,1.4c) genannte ERWARTUNGS-KERNMENGE entspricht der Antwort auf die Frage, welche Punktmenge bei bestimmter Codiertiefe (mit akzeptabler Abweichung) bei CL = 0 codierbar ist. Hat man sie gefunden, so braucht man nicht weiter zu codieren.

Man kann das Problem als sukzessive Erwartungsmenge der BPCM auf die Frage nach IRRELEVANZ mit (Erwartungsmengen-Code 00..1) oder umgekehrt auf die Frage nach RELEVANZ (Restmengen-Code 11..0) mit Codeverlängerung sehen. Dies wurde inzwischen realisierte:

### 3.3. Lineare Interpolation: RECURSIVE BINARY NESTING (RBN) - WO-86/04757 (BT)

BRITISH TELECOM(BT) nutzt diese Abarten, um BEREICHE geringer Abweichung von LINEAREN INTERPOLATIONS-ERWARTUNGSMENGEN als ausreichend codiert anzusehen (WO-86/04757 u. PCT..GB 86/00060). Für diesen Fall genügt es, sinnvoll gewählte Stützwerte, speziell die Ecken eines programmiert ausgewählten (rechteckigen) Bereichs zu übertragen. Diese vereinfachte Variante der EP-0091979 (vgl. dort: Ansprüche 4a,c), verringert die Bitrate laut BT bereits auf 1/Bildpunkt unter Anwendung sukzessiver Halbierung. BT verzichtete damit auf das volle Leistungs-Spektrum des CAUCHY-Prinzips, und erzielte dennoch in einem Auswahl-Verfahren für ISO/CCIT (ESPRIT 563-PICA) hinter der ACT den beachtlichen 2.Platz! In homogenen Bildgebieten erweist es sich naturgemäß der ACT überlegen. Daher wird eine GESCHALTETE BPCM mit RBN und gem. CAUCHY-Prinzip bereichsreduzierter ACT erfindungsgemäß vorgeschlagen, denn das hierarchische Prinzip ist gemäß BPCM für alle Signalmengen, kombiniert mit noch größerem Vorteil, anwendbar, wobei Schätz-Mengen (Formen!) die bilineare Interpolations-Menge verbessern!

- vgl. Abb.Ia u. IId, sukzessive lineare Halbierung

### 3.4. Eine sukzessive örtliche BPCM in der Praxis (TU Hannover)

Die BPCM gilt für beliebige fest gewählte oder sogar durch das Signal direkt/indirekt selektierte Bereiche. Lokale VERSCHIEBUNGSBEREICHE wurden nun als EB1 sinnvoll abgeschätzt.f Im Inneren führt die Sukzession zu einer hervorragenden Konvergenz: Jeder Teilbereich kommt mit sukzessiv kleineren Codelängen CL für die VERSCHIEBUNG aus, bis zur Codelänge Null für ganze Bereiche. Damit wurde hervorragende Bildschärfe erzielt (vg. SIGNAL- PROCESSING 11/86, S. 387ff., speziell Punkt 3.2 u.3.5). VERSCHIEBUNGEN (s.DBPCM) bilden die BPCM-Wertemenge. Die erfindungsgemäß consequequentere Nutzung des CAUCHY-Prinzips (erst größer, dann feiner bis zur Konvergenz) erspart die angegebenen komplexen Rechnungen: Jene initial grobe geometrische,hierarchisch feiner werdende Gebiets-Selektion wird durch ebensolche Selektion der Funktions-Bereiche der Punktmenge ergänzt!

- entspricht Abb. I kombiniert mit III

### 3.5 Eine Verallgemeinerung auf Differenzenbereiche gemäß EP-0244660 (W.K.)

Zu codierende RELEVANZ ist durch DIFFERENZEN-BEREICHE charakterisiert,speziell Inter- und Intraframe-Gradienten. Dies wird in der EP-0244660 (A1) für und durch BPCM genutzt und technisch nutzbringend ausgebaut (Abk. DBPCM):

a) Signal-Analysen werden auf die Differenz- bzw. Relevanz-Bereiche beschränkt.

b) Anstelle der aufwendigen Suche nach korrelierenden PUNKTEN bei Bewegung tritt zuerst eine einfachere Suche nach Konturen, die hierarchisch erfolgt. Eine solche (IR-)RELEVANZ-SELEKTION ist sehr einfach. - vgl. Abb. II: R/I. Anschließend sucht man längs der Kontur (markante) korrelierende Punkte.

c) Die IRRELEVANZ-BEREICHE werden dabei automatisch selektiert und Bereiche geringer Relevanz, also kleine Differenz-Bereiche sind mit BPCM codierbar.

d) Zwischen je zwei benachbarten RELATIVEN EXTREMA (Min-R, Max-R) ist f(t) stetig nicht fallend! Ist ein TEILBEREICH EB1 dazwischen komplett codiert, so ist er für die restlichen Punkte von S ausgeschlossen, eine RMC (s.o.G5).

- vgl. Abb. Ia: Bereiche EB1,EB2 der monotonen Steigung

Man kann invertiert (vgl. EP-0244660 PUNKT I,5.5) zwecks Anwendung der BPCM die Frage stellen, welcher (Differenzen-)Bereich mit der Codelänge 8,7,6...1.0 selektiert wird. Dafür läßt sich ein (Innen-

:Außen) Bereich (Rechteck, Kreis, Polygon) als GÜLTIGKEITS-BEREICH für eine Absolut- (PCM) oder Differenzwert-Codelänge ermitteln und mittels BPCM codieren. Eine sinnvolle Selektion des zugehörigen Gebiets-Randes kann gem. Abb.IIa mit true/false = R/I erfolgen.
- vgl. Abb. IIa: Blöcke R/I

## 4. Mängel der BPCM, Aufgabe der Erfindung

Hochaktive Bereiche sind für Konvergenz-Verfahren sowie DPCM völlig ungeeignet. BPCM-Codieraufwand übersteigt dort,bei unzweckmäßigen Vorgehen, jenen einer PCM! Welche der vielen vorbekannten Methoden Vergleicher, Mikroprogramme, Analog-Verfahren) zur Bereichs-Festlegung und Präcodierung (Prädiktion), einzeln und kombiniert, nach Relevanz-Selektion (DBPCM) am besten geeignet sind, ist offen. AUFGABE DER ERFINDUNG ist die Nutzung zulässiger Vergröberungen und anderer Signal-Zusammenhänge zu weiterer Reduktion der CODIER-MENGE CM als Funktion der INFORMATIONS-MENGE I jedes INFORMATIONS-KÖRPERS IK von und für S.

## 5. Neue Aspekte

### 5.1. Hinreichende Prämissen für Bereichs-Prädiktion, bottom-up Restmengen-Code

Ein BEREICH ist als ERWARTUNGS-BEREICH EB präcodierbar oder schätzbar. Für das Zutreffen jenes EB ist hinreichend, daß P(min) und P(max) im EB liegen. Dieses Zutreffen ist mit einem bit codierbar. Sonst liegt mindestens ein Extremum in einem REST-BEREICH. Für die RESTMENGE RM wird ein RM-CODE übertragen, der bei Relevanz mitteilen kann, daß ein anderes Verfahren (ACT) dort sinnvoller ist.
    a) Man wählt (prädiziert) eine sinnvolle,infrage kommende RESTMENGE beliebiger Größe und Dimension und teilt (sukzessiv) mit, ob sie zutrifft, also E(1,2) enthält bzw. einen EB zutreffend in gewünschter Art komplettiert.
- vgl. Abb. Ic
    b) Der Bereich wird solange (z.B.mit 1-bit-codierten Verdopplungen) erweitert, bis er ein EB ist, was nicht symmetrisch um einen SCHWERPUNKT erfolgen muß! Die DBPCM zeigt in Kap. IV, daß (und wie z.B. auch) eine unsymmetrische Sukzession erfolgen kann. Sie kann von Wahrscheinlichkeiten beliebiger Art gesteuert sein,nun Bereiche beliebiger Art (Werte + Adressen,Form) umfassend.
- Abb. IIb, d
    c) Bei natürlichen Signalen korrelieren meist mehrere Merkmale. So ändert sich an einer Kontur meist Helligkeit und Farbe vollständig, während eine nur kleine Varianz der Helligkeit (die Bereichs-Weite!) auch nur kleine Varianzen der beiden komplementären Farb-Komponenten abschätzbar macht. Diese 3 Komponenten seien nun im Punkt X,Y,Z des geometrischen 3D-Bereichs von Abb. Ic als VEKTOR-BEREICH mit weiteren 3 Komponenten enthalten. Ein Gesamtbereich besteht also aus 6 Koordinaten, die insgesamt und in jedem beliebigen Teilbereich dem CAUCHY-PRINZIP folgen: der Adressbereich nimmt in allen Koordinaten sukzessiv ab, damit auch die nötige Codelänge.

### 5.2 Nutzung weiterer Gesetze der Mengenlehre

### 5.2.1 Nutzung der LEEREN RESTMENGE (RML) als eine Aufgabe der Erfindung

Satz: Stetige,beschränkte Bereiche enthalten mindestens einen HÄUFUNGSPUNKT(HP)
Reale Konturen zwischen ebenen Flächen entsprechen der IDEALEN SPRUNG-FUNKTION! Letztere besitzt 2 scharfe HÄUFUNGS-PUNKTE HP1,HP2 (kleine Abb.Ib): Kein realer Wert liegt zwischen HP1 und HP2!! Im Inneren von EM1 liegt die LEERE RESTMENGE RML(Sprung-Offset), solange der real scharfe Sprung von System-Zeitkonstanten T unverfälscht ist. Codiert man an der Kontur (Kante) irgendwo beide Limites, so liefern sie die beschriebene (Luminanz-) DOPPELPRÄDIKTION DP = (HP1, HP2), als obere und untere Bereichsgrenze des Sprungs (BPCM II,2.4.: scharfe Sprungkante). Generelle Bereiche besitzen mehrere HP(i), i = 1,2,3...- Ein primärer ERWARTUNGS-BEREICH EB1 ist zwischen solchen absoluten Extrema MIN1,MAX1 um RML reduzierbar!


5.2.2. Exklusions-Prinzip an unscharfer Kontur, Dichte-Funktion - s. Abb.lb

Besteht ein gewählter Bereich aus derartigen systemverfälschten fremden Mengen (Funktionen, durch eine nichtideale Kontur getrennt), so findet man entlang der Grenze einen UNSCHARFEN SPRUNG (RML), charakterisiert durch das Fehlen scharfer Häufungspunkte HP(i). Sie verschwimmen zu über EM21 und EM22 leicht meßbaren BEREICHEN EB21 und EB22. Die RML ist als ihr ABSTAND meßbar. Liegt RML innerhalb der vorbekannt meßbaren Zeitkonstanten T, so ist es eine SCHARFE KONTUR, die RML wird also eliminierbar, z.B. indem der 1.relevant von EB21 abweichende Wert der Menge EM22, also dem Bereich EB22 zugeteilt wird! Durch Superposition der EM(i.j), incl. Subtraktion von der Primär-Menge EM1, gilt auch für die EB(i,j):

EM2 = EM21 + EM22 = EM1 - RML, mit EM21/EM22 als EM unter-/oberhalb Sprung DB = EB2 = EB21 + EB22 , DP = (HP1,HP2) wird zum DOPPEL-BEREICH DB

Die Einzel-Extrema des zugehörigen DOPPEL-EB enthaltene Punktmengen EM21,22) sind direkt meß- und schätzbar, ebenso deren "ADRESS-BEREICHE" T(i) über die "Adressen" t(i), damit insgesamt die Menge (Sprung-Start, -Ende, -Offset). Beschränkte Mengen S können so einer (sukzessiven) Inklusion und Exklusion, einer Superposition der BPCM, unterzogen werden. Im einfachsten Fall besteht eine resultierende ERWARTUNGSMENGE EM2, aus konvergenten Teilmengen EM21, EM22. Einfach meßbare BEREICHS-WEITEN und ihre DICHTE-FUNKTION charakterisieren HÄUFUNGS-PUNKTE und zugehörige Bildgebiete (Merkmal-Analyse,Objekt-Erkennung).
- s.Abb.lb, senkrecht: Dichte = Punktzahl/Abschnitt


5.2.3. Mehrfaches Exklusions-Prinzip, Kontur-Schärfe der BPCM

Eine Menge besteht aus (minimal 2)Werten, die sich bei Quasi-Stetigkeit häufen. In komplexeren Mustern treten mehrere Häufungs-Bereiche EB(i) auf. Polyvalente Karomuster haben mehrere EB(i) als quasikonstante HP(i) (kl.Abb.lb), zwischen denen jeweils Restmengen RML(i) liegen. Kleine Streuungen machen jene HPe zu UNSCHÄRFE-BEREICHEN mit jeweils kleinsten erforderlichen Umgebungs-Skalen incl. prädizierbaren Codier-Schwerpunkten. Eine RML-EXKLUSION erlaubt sehr scharfe Kontur-Codierung! - Auf nur einen Bild-Punkt (x1,y1) bezogen, verbessert das auch die DE-3020061. Diese DP einer BPCM eliminiert die konventionelle und nun sinnlose Mittelwertbildung der DPCM-Verfahren an Konturen, die ihren Codier-Schwerpunkt in jener RML haben, wodurch die Konturen bei DPCM mit konstanter Bitrate durch "edge business" und "slope overload" zerstört werden. Subjektiv evtl. als zu scharf empfundene Codierung durch DOPPEL-und MEHRFACH SKALEN ist durch einzelne Code-Worte dazwischen oder ANALOGE FILTERUNG leicht ausgleichbar.

Der Gradient G (DBPCM) liefert Konturlinien als Menge linienhaft benachbarter IMPULSE, welche eine KONTUR im Originalsignal lokalisieren. Die Kontur ist in der Realität scharf, also eine RML, wenn die Impuls-Breite von G innerhalb der Zeitkonstanten T liegt! Die inneren Abtastwerte, physikalisch ja irreal, sind dann eine ignorierbare RML: Die selektierte Kontur (Abb.IIa) ist als Kette von DOPPEL-PRÄDIKTIONEN DP(j), im Idealfall mit jeweils 2 Werten (1bit) codierbar, die im nichtidealen Fall 2 Skalen (DB) zur Nach- Codierung schalten (post codes).


5.2.4. Messung der Zeitkonstanten einer verfälschten Kontur

Die Breite des X-,Y-Gradienten scharfer Konturen ist die Systemverfälschung T. Die von T erlaubt es, die Verfälschungen als je eine RML zu eliminieren. Liegt die Breite der RELEVANZ außerhalb von T, so liefern INTERPOLATIONEN von S -ein quasi konstanter Gradient der DBPCM- häufig eine IDEALE EM (BPCM, II,3).
- vgl. Abb. lb: Zeitkonstante T


5.2.5. Elimination von Singularitäten (Störpunkten)

In realen Bereichen liegen benachbarte Punkte direkt beieinander (Math.: Jeder Punkt is bei Stetigkeit Häufungspunkt!). - Daraus folgt eine Variante der RML: Systembedingt verfälschte Abtastwerte realer Objekte bilden eine Zufallsfolge, ein Rauschen um den Realwert herum. Ein punktueller Stör-Impuls ist also auch eine LEERE MENGE in der REAL-MENGE S und kann der Umgebung angeglichen werden. Liegen umgekehrt mehrere Punkte beisammen (HP), so liegt dort eine REALITÄT, ein OBJEKT und keine System-Verfälschung in Form einer punktförmigen RML.

## 6. Das generalisierte Cauchy-Prinzip

- Die IDEALE BEREICHS-PRÄDIKTION ist selbst letztes Element (unterste Schachtel) eines CAUCHY-Prinzips.Die CODIER-SCHÄRFE ist also selbst top-down präzisierbar!
- Dichtefunktionen der HP(i) liefern ein charakteristisches HÄUFUNGS-SPEKTRUM! -Abb.IIb BEREICHS-WEITEN sind selbst Werte, die ein Objekt (eine Gruppe) kennzeichnen.
- Spiegelnde Wasserwellen bestehen z.B. aus mehrfachen zusammenhängenden Bereichen, z.B. einem hellen, einem dunkelgrauen und quasi FEHLENDEN WERTEN dazwischen.

## 7. Das generalisierte Exklusions-Prinzip

### 7.1. Elimination der codierten Restmengen RMC eines Gebiets

Solche LEERE RESTMENGEN reduzieren die Codier-Skalen absolut. Auch CODIERTE REST-MENGEN schränken im Fall der Monotonie den Skalen-Bereich ein. Wurden z.B. alle relevanten (Raum-)Adressen der o.g. Wertegruppe von I1 im 1.Halbfeld übertragen, so ist jede verbleibende Adresse mit 1 bit weniger übertragbar (1/2 = -1bit). Auch diese RMC ist also zur Reduktion einer Codemenge nutzbar.

### 7.2. Die Signalmenge als speicherbarer Körper IK(x,y,z...)

Sendeseitig ist jede zu übertragende SIGNAL-MENGE S bekannt und beschränkt! Die Signal-Speicherung ist seit der Serienproduktion von MEGA-CHIPS problemlos, sodaß große INFORMATIONS-KÖRPER IK mit feinster Auflösung speicherbar sind. Die Größe eines initial gewählten Blocks IK, speziell in der oft invarianten z-Richtung im TV-Bild, ist nur von zulässigen Verzögerungszeiten beschränkt! Deren Nutzung zur Datenreduktion ist eine AUFGABE DER ERFINDUNG.

schematische Lösung:

Das sendeseitige Abtastraster, die Maße des initial zu übertragenden IK-Blocks, einschließlich Adress- und Zeit-Konstanten T(i), davon abhängige Übertragungs-und Rekonstruktions-Algorithmen sind normierbar. Der IK wird nach dem CAUCHY-Prinzip sukzessiv in allen Dimensionen zerlegt. - vgl. Abb-Ia-c, IIa

Für Abschätzungen top-down und bottom-up gilt: Enthält ein EB seine wahren Extrema (und das möglichst genau),so ist er ein (SCHARFER) IDEALER EB,ist also korrekt, was mit einem bit mitgeteilt wird. In der zwischen MIN-CODE und MAX-CODE nun längenreduzierten Weite z.B. 80...110) sind mit 5-bit-PCM-Codes alle realen Extrema Min,Max (z.b. 90,97) punktgenau codierbar. Alle Teilmengen oder Einzel-Punkte darin sind mit maximal 3 bit zwischen 90 bis 97 codierbar.

- vgl. Abb. Ia-c

Bevor im Kapitel V die hocheffizienten Formen des neuen Verfahrens beschrieben werden,wird in Kap.III die REDUNDANZ-ERHÖHUNG zur Fehler-Elimination behandelt, um die Grundlage für später wegfallende Extremwert-Präcodes zu legen. Bei der VEKTOR-CODIERUNG in Kap.IV werden sukzessiv bereichseinschränkende Sequenzen von 1-bit-Worten vorbereitet.

## III) REDUZIERTE DBPCM, FEHLER-ELIMINATION

Übertragungsfehler bilden bei DPCM-Verfahren enorme Probleme. Der Stützwert zur Errechnung des nächsten Punktes fällt aus und damit das gesamte Signal, solange, bis ein PCM-Stützwert gesendet und korrekt empfangen wird. Die BPCM bietet durch zwei überlappende Gebietsaufteilungen eine elegante Lösung an:

1. Überlappungs- und Differenzenblock-Codierung und deren Gerippe

Mann kann die BPCM derart verallgemeinern, daß man nun BLÖCKE so erzeugt, daß sie sich (zur Hälfte) überlappen. Indem jeder IK durch eine unterschiedliche Segmentierung doppelt codiert wird,ist ein ausgefallener Block rekonstruierbar. Um eine Verdopplung der Datenrate zu vermeiden, aber auch für sich alleine, empfiehlt sich die DBPCM-Codierung von DIFFERENZEN-BLÖCKEN DIK zwischen Stütz-Blöcken IK der Nummer i und i+n:

$$IK(i+1) = IK(i) + DIK(i,i+1) \qquad i = (1,2,3...k1)$$

$$\text{allgemeiner: } IK(i+n) = IK(i) + DIK(i,i+n), \qquad n = (1,2,3...k2)$$

DIK(i,i+n) setzt sich aus der Summe der elementaren Bild-zu-Bild-DIK zusammen. Die Differenzen-Bereiche müssen in ihren (präcodierten) Grenzen allerdings absolut genau codiert werden, was die BPCM mittels Intervall-Schachtelung auf sehr vorteilhafte Art erlaubt. Das Problem der Übertragungs-Fehler entspricht dabei genau dem der Delta-Modulation und ist folglich ebenso lösbar.

2. Interpolation zwischen Stützwerten (Gerippe)

Bei Schätzbarkeit oder ausreichend genauer Interpolation genügen sogar GERIPPE davon, indem man z.B.Eckwerte von Teilblöcken als (Differenzen-)Code überträgt. Eine hocheffiziente Form wird in Kap.V behandelt werden. Die STÜTZWERTE sind mit interpolierten FORMEN, speziell nichtlinearen der Vergangenheit,auffüllbar. Bei Relevanz-Verfolgung dürfen die FORMEN auch wandern: Es werden die PRIMÄREN RELEVANZEN wie Konturen (maximale Gradienten) verfolgt,danach darauf und darin sekundär-relevante Punkte gesucht (Kap.VIII). So geht das menschliche Auge vor! Mit den DIK seien auch Blöcke einer verallgemeinerten DBPCM und Gradienten-Definition mit groben Initial-Schritten gemeint, was Code-Reduktionen ergibt.

## IV) VEKTOR-BEREICHE

1. Relevanz- und Irrelevanz-Suche gemäß Abb. IIa,b

In der BPCM ist bereits den Fall erwähnt,daß ein KEGELBEREICH längs der z-Achse sukzessiv Bewegung ausschließen kann. Man kann sich dies als fortlaufende Schachtelung von Hohlkegeln vorstellen, deren Spitzen in Richtung der Zukunft zeigen. Bei fehlender Bewegung (Irrelevanz) werden die Öffnungswinkel größer sonst immer kleiner. Eine Relevanz sucht man ebenso, doch genau umgekeht:
Gemäß DBPCM sucht man Relevanz (hier Bewegung) möglichst in Gradienten-Extrema, nun auch in ganzen Blöcken des X-,Y- oder Z-Gradienten. In diesem Fall ist der Kegel in Richtung der Zukunft offen. Der Suchwinkel vergrößert sich, wenn die RELEVANZ den EB verläßt. Er verkleinert sich, wenn sie sich im Innern befindet, um sie sukzessiv genauer zu zentrieren. Der Gradient ist eine Vektorfunktion. Eine auch für den Gesamt-Vektor der Relevanz gültige Vektor-Bereichs-Codierung sei am anschaulichen Beispiel des vollständigen Farbsignal-Vektors beschrieben.
- vgl. Abb. IIb für beliebige Suchfläche

2. Der völlständige Farb-Vektor aus Luminanz und Farbe

LUMINANZ-BEREICHE (L) sind in den Koordinaten x, y, L (Luminanz), z.B. durch die Menge der Extremwerte (x1,x2; y1,y2; L1,L2;), als Quader anschaulich darstellbar. Dies entspricht dem folgenden Bereich: (x2-x1; y2-y1; L2-L1). Die Luminanz-Funktion L(x,y) ist darin die Betragsfunktion des ortsabhängigen vollständigen Farb-Vektors V(x,y). Die Codierung des L-EB, also des Betrags von V mittels generalisier-

9

ter BPCM (GBPCM) wurde beschrieben. Die Farbe läßt sich bekanntermaßen auf zwei orthogonale Komponenten eines Vektors reduzieren. Das dreidimensionale Problem werde hier allgemein behandelt, woraus sich ganz beliebige Vektor-Darstellungen incl. einer Farb-Codierung ableiten lassen.

Die vollständige Vektor-Funktion $\underline{V}$ eines Punktes x,y,z,... ist fast stets auf die positiven Werte und damit auf das positive Achtel eines Kugelkoordinaten-Systems (1.Oktant) beschränkt. Die Phase läßt sich überall als EINHEITSVEKTOR in den kartesischen Koordinaten, z.B. für Farben r,g,b = $\underline{V}$(x,y,z) darstellen.
- vgl. Abb. III Vektor-Bereich

## 3. Ein dreidimensionaler Einheits-Vektor

Ein Einheits-Vektor ist äquivalent durch die 3 Richtungs-Cosinusse, als auch 2 WINKEL vollständig definiert. Letztere eignen sich besser zur Rekonstruktion von Farbe. Die EINHEITSKUGEL im 1.Oktanten ist Gültigkeitsbereich dieser PHASE.

## 4. Beispiel: Eine effiziente Vektor-Form der GENERALISIERTEN BPCM (GBPCM)

Der BEREICH des Einheits-Vektors wird, anfangs in einem groben Kugelflächen-Segment, als EB1 präcodiert, worin sukzessiv verfeinert wird! An die oben und in der BPCM (II, ab 1.3, speziell in 1.5) angegebene Form sei hier angelehnt:

a) "1" Bit 1 gibt an, daß ein primärer EB1 für einen Winkelbereich, hier z.B. 0...45 Grad, zutrifft und mindestens ein Extremum enthält. Eine Null besagt dagegen, daß kein Extremum darin enthalten ist: Min. und Max. liegen dann beide in der anderen Hälfte (EXKLUSIONS-PRINZIP)! - Und:

aa) Bei schätzbaren Bereichen wird man engere Primär-Bereiche wählen, z.B. 35...45 Grad als EB1, ebenso für den zweiten Winkel 10...15 Grad.

b) "11" gibt an, daß beide Extrema eines Winkels sich in dem Segment befinden, usw. - Die Codes sind auch invertierbar und weitgehend modifizierbar!
Mit jenem DOPPEL-CODE 11 (ggf. auch "1"!) engt man beide Winkel sukzessiv ein.
- analog Abb.Ia,IIb in Abb.III: (MIN,MAX);(min,max)

c) Statt Winkel sind beliebige Funktionen wählbar (PAL-, D2-MAC-Farbvektoren)! Eine Variante ist die Aussage, ob sich alle vier Extrema beider Winkel im EB1 befinden, wobei der EB1 z.B. ein definierter Suchkegel im 1.Oktanten sein darf. Wenn ja, dann ist eine sehr große Ersparnis gegenüber direkter Präcodierung aller Extrema erreicht worden. - Wenn nein, so geht man besser gemäß 4a vor, wobei das 1.Code-bit auch für eine Gruppe (hier: 2 Koordinaten) gelten kann.
- Abb.III: 4 Extrema von 2 Aussagen im Raum

d) Eine weitere Variante ist die Aussage, ob sich z.B. sechs Extrema,Beträge u. Vektor-Phasen in einem 3D-Bereich des 1.Oktanten befinden. Das ist ein EB1,der L als geschätzten Radius-Abschnitt zwischen R1 und R2 (z.B.zwischen 60 und 100 von maximal 255 PCM-Werten) den Phasen-Winkeln hinzufügt. - Bei fehlender Vergangenheit wird man R(absolut) = 0...255 sukzessiv halbieren, wie in 4a! Auch indirekte Bereiche (Minimum und Code-Länge) sind so prädizierbar. Wesentlich ist, daß der ADRESS-RAUM der (D)IK (sukzessiv) eingeschränkt wird! Man kann auch, wahrscheinlichkeitsabhängig, mehr Alternative 4a oder b wählen: Analysen der Luminanz-Änderung signalisieren zudem adäquate Farb-Änderungen.

## 5. Eine GESCHALTETE GBPCM

Beachtet man nun noch, daß kleine Änderungen der Luminanz fast immer gleich-gerichtete Änderungen der Farbe (Phase, und umgekehrt) bedingen, so kommt man auf eine GESCHALTETE GBPCM, die nun, änderungs-abhängig, die effiziente Methode verläßt und zwischen den Methoden 4a und 4b (oder ähnlich, sinngemäß) schaltet. Ebenso kann ein bit mitteilen, ob DBPCM oder direkte BPCM code-günstiger ist.

## V) SUKZESSIVE CODE-LÄNGENPRÄDIKTION

## 1. Einfache Code-Längenprädiktion, größeres CAUCHY-Prinzip

Auf einer Präcodierung (Prädiktion) aufbauend, wurde das CAUCHY-Prinzip Basis einer primär groben, dann immer präziseren Schachtelung. Damit wird auch eine Skala sukzessiv genauer und die minimal erforderliche CODE-LÄNGE ist davon abhängig: Die reduzierte WEITE reduziert implizit die nötige CODE-LÄNGE (CL).

- Umgekehrt codieren verkleinerte Codelängen weite Bereiche stark vergröbert, wenn Präzision (noch) nicht sinnvoll ist, wie die BEREICHS-PRÄDIKTION künftiger Differenzen- (Gradienten-) Bereiche, die nur unscharf oder garnicht möglich ist.

- Die für einen bestimmten EB genügende CL enthält meist großen Spielraum: Dieser Spielraum des Codeworts, also das Verhältnis codierbare/erforderliche Skala wird durch das Exklusionsprinzip verringert, also auch diese Redundanz.

- Als recht grobe Bereichsaussage darf CL für einen Bereich selbst präcodiert werden, was zur CODEWORT-LÄNGENPRÄDIKTION führt (vgl. BPCM-Beschr.: II,1.3).

## 2. Sukzessive Code-Längenprädiktion top-down

Anschaulich geht man auch hier von einer DIREKTEN BEREICHS-PRÄCODIERUNG aus: Die Erfindung beschreibt eine (sukzessive) BEREICHSPRÄDIKTIVE CL-PRÄDIKTION; darin wird die CL selbst Objekt der Prädiktion (incl. Präcodierung). Sie sei für eine große Luminanzskala L, z.B. im Extremfall "Vollbild", beschrieben:

a) Für dessen linearen L-EB zwischen 50 u.180 braucht man 8 bit,obwohl von der 256-wertigen L-Skala nur 130 Werte benötigt werden. Mit 8,7,6,5...1 bit werden 256,128,64,32...2 L-Werte erreicht. Deren Offset ist Sender und Empfänger nach Präcodierung der Extrema, aber auch nur der minimalen Bitzahl der Code-Länge, also BZ(CL),vollauf bekannt! Die hierarchische Teilung kann nun gemäß Abb. IId erfolgen, um mit je einem bit sukzessiv mitzuteilen, ob 7,6,5...1,0 bit für die Teilbereiche genügen. Wo nicht, teilt man weiter und selektiert Konturen (Abb. IIa), die nun prädiktiv verwendbar sind. Effizienter sind Volumina gem.Abb.Ic! In V,3 wird gezeigt, daß diese Code-Längen vollständige Codierungen gestatten!

b) Ist die (Irrelevanz-)Schätzung CL = 3 für eine Skalenweite falsch, die weitere Schätzung CL = 4 aber richtig -mit je 1bit mitteilbar- so ist Max ab Min mit 3bit codierbar, weil CL = 3 falsch war! Dasselbe gilt sinngemäß für MONOTONE BEREICHE. Ein Offset von 8 bit impliziert, daß die Extrema mit 7 bit in der RM codierbar sind und umgekehrt! Die Präcodierungen sind auch mit groben PCM-Skalen möglich (2-4 bit für alle Werte). Dazu wird CL (= 1 bis 4) mit BZ = 2 bit präcodiert!

## 2.1. Änderungs-Relevanz- / Irrelevanz, NULL-MENGEN

a) Liegt keine Relevanz vor, so genügt eine Code-Null für jeden gewählten oder durch das Signal selektierten (natürlichen) Bereich - in allen Koordinaten!

b) ABSOLUTE IRRELEVANZ liegt in der untersten CAUCHY-Schachtel immer vor, wenn ca. P(min) = P(max) mit zulässiger Toleranz gilt. Dann sind alle Werte der MENGE Null, die Menge also eine NULLMENGE (NM) mit CL = 0. Ist eine Menge von CL(i) Null, so gilt dies auch für deren Bitzahl BZ, also BZ(CL(i)) = 0, usw.

c) Nur bei Relevanz muß man einen Bereich (weiter) codieren. Für jeden Bereich kann ein führendes mit präcodieren,ob eine codierenswerte Relevanz vorliegt. Wenn ja, so ist die Relevanz primär unscharf, dann immer schärfer codierbar.

## 2.2. Hierarchische Anwendung: Erforderliche Codelängen-Skala CL bei Relevanz

Für einen OFFSET zu P(min) werde von der maximal erforderlichen 8 bit PCM-Skala ausgegangen: Für deren CODELÄNGE CL = 8 ist die BITZAHL BZ(CL) schon mit 3 bit präcodierbar, da CL = (000,001,010,011,100,101,110,111) für die Skalenlängen SC = 0...255, also dem Empfänger vorab mitteilbar, BZ selbst sogar mit 2 bit!

## 2.2.1 Ein sendeseitig hierarchisches Reduktionsschema (vereinfacht)

```
a)  <----------<==E3==>-------------......--->      A3 = Absolutbereich
              P(min)  P(max)                        mit Codelänge CL=8


    a1:       <#######>  Codelänge CL(A3), Min./Max. CL(A3)  = 8 bit,

    a2:       <#*>       Bitzahl für absolute CL   BZ1(CL) = 3 (schätzbar)

    a3:       <+>        BZ2(BZ1)                  codierbar max.2bit!

    a31:      <+>          "    "   , mit Exklusion:  je 1 bit


b) oder sofort max. Offset-Codelänge von E3 (s.o.), indirekte BPCM:


    b1:       <==EB==>                             Relativbereich EB=8

              P(min)  P(max), für jeden Bereich ist die CL mit 3bit codierbar!

    b2:       <**>  CL des EB                      Codelängen-Bereich

    b3:       <+>   BZ(CL), z.B.: BZ=2 oder BZ=3, mit 0/1 grob präcodierbar.
```

Voraussetzung für empfangsseitige Rekonstruktion ist ein eineindeutiges (reziprokes) Schema, ggf.mit sendeseitig (bitweise) gesteuerten Ablauf-Alternativen. OFFSET-PRÄCODIERUNGEN sind sogar für eine vollständige Codierung hinreichend, d.h. es genügt die Codierung von OFFSETS ohne jegliche Extrema (Min, Max)!

## 2.3. Beispiel für empfangsseitig rekonstruierbare Sendung gemäß 2.2 (top-down)

Das obige Schema enthält eine sukzessiv vergröberte Information. Gemäß dem FESTGELEGTEN ABLAUF, z.B. Präcodierung der Offsets, (darin) der Extrema, folgen die eigentlichen Daten-Codes der eingeschlossenen Werte oder weiterer Extrema definierter Teilmengen. Man baut evtl. auch auf der Vergangenheit auf, ähnlich wie bei vorbekannter DPCM-Codierung (Sender/Empfänger arbeiten invers).

a1: Die Skala für den Offset ist stets direkt mit 8 bit codierbar.

a2: Der Sender präcodiert besser grob, wieviel bit die Codelänge besitzt: Der Code 011 teilt z.B. mit, daß CL = 4 ist, 000 entspricht dabei CL=1; also daß der Offset des EB ab P(min),incl. jedem Wert,maximal 16 beträgt! Das nächste bit kann mitteilen, ob 3 bit reichen,usw. (Schema "top-down", hier wäre es besser, nach dem bit CL=4=true, CL mit 2 bit zu präcodieren). Nun ist jede Teilmenge mit ihren Extrema E(i) in 16 PCM-Stufen codierbar! In dieser reduzierten PCM-Skala ist jeder Teilbereich (ebenso) codierbar.

a3: Mann kann gröber einsteigen und wählen: kleiner 8,(7,),6,(5),4...bit = 0/1

Bei hoher Wahrscheinlichkeit für einen bestimmten Adress-Bereich sind solche Schemata und Bereichs-Schätzungen, auch durch (geschätzte) Exklusion, sinnvoll:

b3: Wenn BZ=2 z.B. fast sicher genügt, also CL=4 (statt 8) gewinnt man 3bit!

- Ein grober 1-bit-Code 0 (t0) könnte auch aussagen, daß CL=3 (2) genügt.

b2: Die Codelänge ist auch direkt mit 3bit (s. a2) codierbar.
- mit 1 bit ist genauer präcodierbar, ob irgendein geschätzter EB genügt.


2.4. Weitere einschränkende Prämissen bei MONOTONIE (Schema "bottom-up")

Im Fehlerfall z.B. muß man bottom-up vorgehen. Auch dann ist eine RMC nutzbar:

a) Setzt man EIN-BIT-SKALEN für L als irrelevant, also 2 L-Werte (Abweichung), so nutzt man das bit V(1). um den Empfänger mitzuteilen, ob für die Skala mit der Bitzahl BZ ein bit ab Minimum genügt. Es sei dazu eine monotone Funktion, im Verlauf etwa gemäß dem Anstieg in Abb.Ib, betrachtet.

Nach bit V steht fest, ob nun ein weiteres bit Q(1) zur Codierung mit der Alternative (L = 3,4) ausreicht und die Codierung danach abbricht! Diese Alternative beschreibt hier aber auch wieder einen IRRELEVANZ-BEREICH. Will man (bei quasi Rauschfreiheit) genau sein, so kann man dennoch den EB von 2 bis 3 mit 1 bit pel (von 1...4 mit 2 bit/pel) mit o.g. BPCM-Verfahren, absolut genau codieren! Dann ist die Codierung für den Bereich abgeschlossen.

Andernfalls geht die (Bereichs-)Codierung weiter und es kommt der nächste (hierzu fremde) Bereich an die Reihe:

b) Ein bit W(1) genügt für eine Mitteilung, ob ein 3-bit-Wort mit der L-Skala bis zum Wert 8 mit CL = 3. (s.2.3,a2) sonst 41) dafür ausreicht. Vergröbert entspricht das der Mitteilung, ob statt Bitzahl-Skala BZ-(CL) = 3, BZ = 2 genügt!

- Die folgende L-Skala steht damit zugleich mit dem Maximum 8 fest.
- Außerdem steht aber nach bit V (s.o.) schon fest, daß die Werte 1 bis 4 für den Offset, bei Monotonie sogar für alle Punkte, ausgeschlossen sind!
- Daraus folgt aber, daß nur die Werte zwischen 5 und 8 dafür infrage kommen. 4 Alternativen (L = 5,6,7,8) sind mit zwei bit codierbar!
- Dann beschließt die Skala Q(2) die Codierung, speziell mittels BPCM, wie unter a), entsprechend punktuellen, exakten PCM-Codes mit 2 bit. Andernfalls geht die Codierung weiter:

c) Andernfalls trifft die volle LÄNGENSKALA mit BZ = 3 bit zu, entsprechend der 8-bit-PCM-Längenskala CL = 8, mitgeteilt mit dem inversen bit W. - Innerhalb von Max-Min = 130 sind im EB1 alle Werte mit Differenzen unter 8 codiert! So kann man weiter fortfahren. Schon hier bewirkt das Exklusionsprinzip:

- Ein 7-bit-Wort reicht zur Codierung aller restlichen Untermengen im EB1, denn die Bereichs-Weite lag ja (s.o) bei 130 Werten. Ausgeschlossen sind 8! Für die restlichen 122 Werte, also jeden möglichen OFFSET, reichen 7 bit!
- Benötigt man bis zum EB2 110 Skalenteile, so reichen 4 bit für EB2 (EM22) mit den übrigen 12 Skalenteilen. Die jeweilige RMC erspart Extrema-Präcodes.


2.4.1 Kreis-Skala, sukzessive Exklusion durch RML, RMC und Wahrscheinlichkeit

Das EXKLUSIONS-PRINZIP der RMC schränkt sukzessiv die Möglichkeiten ein, womit sich die REDUNDANZ DER CODELÄNGEN einschränken läßt. Dazu gibt es noch weitere ungenannte Möglichkeiten. die aber, speziell in Kombination mit den Verfahren unter II und III ff., garnicht aufzählbar sind. Differenz-Bereiche von 8-bit-BPCM-Skalen benötigen, entgegen verbreiteter Meinung nicht 9 bit, wie direkt verifizierbar: In der vollen PCM-Skala SC = MAX(absolut) = MIN(abs.) = 255 gilt:

EM + RM = SC oder: SC - RM = EM, mit RM = DIFF(max.)

- Der Empfänger kennt die absoluten Grenzen, auch, wo relativ ab dem letzten codierten Punkt P, jene liegen. Stellt man sich die Skala als Kreis vor, so liegen Extrema direkt nebeneinander (z.B. Schwarz neben Weiß). Keine Menge kann mehr Werte als die Absolut-Skala besitzen (präcodierte Weite oder 256).
- Man kann Mengen sukzessiv, z.B.im Halbkreis,2.Quadranten,4-Oktanten...suchen. Gemäß der durch P geteilten Mengen ergibt sich die Unsymmetrie der Auftritts-Wahrscheinlichkeit gemäß seiner Entfernung zu den Absolut-Grenzen, die nun zu EB-Schätzungen nutzbar ist.


2.5. Beispiel-Schema zu 2.4. für die Skalenweiten ab einem präcodierten Minimum

| EB-Skala / Werte-Bereich L | Skalenlänge / bits für CL / BZ (f.Werte) | Bits f. CL / BZ = 1...3; Ja/Nein-bit f. Bereich | Bits für U;V;W... bisher Summe | Punktmenge EM mit Q(n) innerhalb EB quantisierbar mit (Bitzahl) | logi-scher Programm-Entscheid |
|---|---|---|---|---|---|
| +(0;1) | 1/1 | U = j | S=1 | Q(0) | ⇒ENDE |
| +(2;3) | 2/1 | U = n | | | Weiter |
| reduziert: | 1/1(2 oder 3) | | | | |
| +(2;3) | 2/1 | V = j | S=2 | Q(1) | ⇒ENDE |
| (4...7) | 3/2 | V = n | | | Weiter |
| red.: | 2/1(4,5,6,7,) | | | | |
| (4...7) | 3/2 | W = j | S=3 | Q(2) | ⇒ENDE |
| (8..15) | 4/2 | W = n | | | Weiter |
| red.: | 3/2 (!) | | | | |
| (8...15) | 4/2 | X = j | S=4 | Q(3) | ⇒ENDE |
| (16..31) | 5/3 | X = n | | | Weiter |
| red.: | 4/2 (!) | | | | |
| (16..31) | 5/3 | Y = j | S=5 | Q(4) | ⇒ENDE |
| (32..63) | 6/3 | Y = n | | | Weiter |
| red.: | 5/3 (!) | | | | |
| (32...63) | 6/3 | Z = j | S=6 | Q(5) | ⇒ENDE |
| (64..127) | 7/3 | Z = n | | | Weiter |
| red.: | 6 / 3 | ⇒RM = n | | | |
| (128..255): | 7 reduz. | RM = j | S=7 | Q(7) | ... |

- Wegen der hier definierten Irrelevanz (0,1 statt 0...2 gem. 2.3.) ist die L-Skala hier überall um eins niedriger (z.B. 2;3 staff 3;4 u. 4..7 staff 5..8).
- "ENDE" bedeutet, der Bereich ist nach der Quantisierung Q(n) mit maximaler Codelänge n quantisierbar, womit des Verfahren für jenen Bereich abschließt.
- Bereich-Quantisierungen Q(n), incl. jeweils gleichem Schema für Teilmengen führen (bottom-up und) top-down zu rascher Konvergenz (IRRELRVANZ-BEREICH), da jede präcodierte IDEALE EM/RM jede TEILMENGE (deren Teilbereich Max.-Min.) enthält. Erforderliche Codelängen werden (sukzessiv) noch kleiner!
- Die Definition "bottom-up/top-down" ist für Teilungen auch reziprok zu sehen.
- Hiermit wurde eine erste Möglichkeit beschrieben, Präcodierungen von Extrema einzusparen. Tatsächlich genügen Bereichsweiten (CL!) auch sonst, um alle Werte (evtl. aufbauend auf einem einzigen Stützwert des IK) zu codieren:

## 3. Rein relative Offset-Codes, Unsymmetrie

3.1 Stetige Fortsetzung

Sind die Bereichs-Weiten, ("dynamic" ranges), speziell über ihre CL(i), einem Empfänger (auch prädiktiv durch true/false für EM/RM, top-down bzw.bottom-up) korrekt mitgeteilt worden, so kann (mindestens) je ein gemeinsamer Randwert RW(i,j) relativ zu den als PCM-Wert noch unbekannten MIN(i) codiert werden, um eine STETIGE FORTSETZUNG zu erreichen: Aufbauend auf einem einzigen Stützwert S1 (z.B. Min1) eines Adress-Bereichs genügt die Präcodierung von Teilbereichs-Weiten EB(i) ohne aufwendige Codierung des nächsten Minimums:

- Abb.IIa,d: gemeinsame Randwerte RW von je 2 Bereichen Mindestens ein gemeinsamer (Rand-)Wert RW von minimal je 2 (Nachbar-)Bereichen B1,B2,... wird als IDENTISCHER RELATIVWERT zu je einem Extremum der 2 Bereiche (Min1, Min2,... wegen RW = Min1 + C1 = Min2 + C2) in die danach längenreduzierten Skalen von EB1,EB2... impliziert. Es folgt C = Min2-Min1 als BEREICHS-OFFSET des B2 für alle Punkte und beliebig genaue Codes für alle Punkte von B1 ab S1, ab Min2 für B2. Vorteilhaft werden C1, C2 in kleinen Schachteln EB1,EB2 codiert! Vorzeichen entfallen: Per Definition ist das Minimum (ggf. Maximum) präcodiert!

3.2. Beispiel: Sukzessive CL-Prädiktion (V,2) mit stetiger Fortsetzung (3.1):

a) Dem Empfanger wird präcodiert, ob jenem bekannte Bild-Bereiche ( Vollbild, Blöcke, z.B. 64x64 pel) mit weniger als 8 bit PCM-Code von Minimum bis Maximum des Blocks, auskommen. Wenn ja (mit 1 bit = true mitteilbar), wird weiter mitgeteilt, ob weniger als 7 (6, 5 ... 0 ) bit für CL genügen, usw.

b) Wenn nein (bit = false), wird der Block geometrisch geteilt (Halbierung in einer definierten Koordinate, Vierteilung, z.B. in 32x32-pel-Blöcke). Für jeden Teilblock wird erneut das Verfahren a) ab dem erreichten CL angewandt.

c) Die Verfahren a) und b) werden solange sukzessiv angewandt, bis möglichst kleine Codelängen CL, z.B. Blöcke der Weite CL = 3 bis Null(!) bit entstehen. Dabei bleiben kleine RELEVANZ-BLÖCKE mit mehr bit (z.B. Konturen) übrig!

d) Es seien 2 benachbarte Blöcke der WEITE CL = 3 und CL = 2 bit angenommen. Ein gemeinsamer Randwert RW wird im 1.Block B1 mit Minimum(Min1) + Offset C1 bis RW codiert, anschließend ebenso im 2.Block B2 also RW = Min2 + C2 = Min1 + C1. Wird dem Empfänger nur das Minimum Min1 mit einem einzigen 8-bit-PCM-Code mitgeteilt, so genügt zur RW-Errechnung in B1 (PCM-Wert!) ein 3-bit-Code C1.

e) RW ist auch ab Min2 längenreduziert mit 2 bit über C2 genau codierbar. Da RW als PCM-Wert bekannt ist, ist jetzt Min2 als PCM-Wert direkt errechenbar. Ab Min2 wird nun der gemeinsame Randwert RW23 zu einem 3.Bereich B3 codiert. Ab Min3 zu B4,B5,...,usw. Das ganze Bild wird auf diese Art punktgenau mit durch CL(I) längenreduzierten (PCM-)Codes codiert. - Eine so hocheffiziente längenreduzierte PCM-Codierung ist bisher unbekant!

f) Statt mit CL = 8 zu beginnen, ist CL, sogar willkürlich, **abschätzbar** (s.o., z.B. V,2.3 b3). Ist z.B. CL = 4 richtig, so kann man ab dort top-town fortfahren, sonst (else) bottom-up (until true) erweitern (z.B. CL = 5.6...). - Ebensogut kann man grob beginnen, die Bereichs-Skala (auch sukzessiv) jeweils in 2,(4,8,...) Teile teilen und darin mit 1,(2,3,...) bit codieren.

g) Wegen der PUNKT-GENAUIGKEIT sind auch DIFFERENZEN-BILDER (planare, zeitliche Gradienten, Differenzen-Blöcke), auch zu PRÄDIKTIONS-BEREICHEN punktgenau codierbar mit höchster Effizienz bei zeitverzögert dreidimensionalen Blöcken.

h) Wird Min1 = 0 gesetzt, so erfolgt eine SELBST-JUSTIERUNG: Unmögliche Extrem-Werte (out of range) werden solange um den Fehler F (owerflow) korrigiert, z.B. auf Null bzw. 255, bis keinerlei Fehler mehr auftreten. -Analogverfahren führen solche stetigen Fortsetzungen automatisch durch!

## 4. Nutzung redundanter Codes und -Längen

4.1. Nutzung redundanter Randwerte zur Fehlerkorrektur

Gemäß Kap. III,1 können Übertragungsfehler auch durch Bereichs-Überlappung korrigiert werden. Wählt man für jeden Bereich, z.B. Block, ("area") statt nur der unbedingt gemäß 3.1 nötigen Randpunkte für jeden angrenzenden Block je einen Randpunkt (für alle Rechteckseiten: vier) so wird ein Übertragungsfehler dadurch angezeigt, daß über einen Randwert RW1 andere Ergebnisse für einen beliebigen Blockpunkt P errechnet werden, als über die anderen Punkte RW2,3,4. Der Fehler ist daher auf bekannte Art behebbar (geschlossenes Wegintegral = 0!).

4.2. Nutzung redundanter Codes, Codelängen-Redundanz, Mehrfach-Mitteilungen

a) PCM-Präcodes für Min und Max sind auch durch die Mitteilung PM = (Max + Min)/2 (Mit 8 bit) sowie der halben Bereichsweite EB/2 mitteilbar. Letztere ist, je nach Lage des Mittelpunktes PM (wegen der bekannten Absolut-Grenzen) stets mit weniger (als 8)bit, je nach möglicher Differenz (GRENZE-PM) mitteilbar.

b) Eine ADRESS-PRÄCODIERUNG kann durch eine feste ORDNUNG ersetzt werden, z.B. die bekannte bildweise, dann zeilenweise, dann punktweise Hierarchie oder die hier geschilderten Alternativen. - Dies gilt natürlich auch blockweise. - vgl. Abb. IIe: gestrichelte Adressen von (relevanten) Stützwerten.

c) Explizite Extremwert-Präcodes weisen scheinbar Redundanz auf, wenn z.B. das Maximum eines Blocks durch einen zusätzlichen Code als Wert präcodiert ist: Ist z.B. CL = 4 (16 Skalenteile) präcodiert und Max-Min = 11 (binär: 1011) so sind die vier (Max-)Codes 12,13,14,15, binär 1100,1101,1110,1111, redundant. Da die Zahl 11 ab Min nicht überschritten werden kann, sind jene Binärworte (als Binärworte 00,01,10,11 umcodierbar) für ganz andere Zwecke verwendbar, sobald, gemäß b), der Maximalwert an die Reihe kommt. Der Empfänger weiß ja schon, daß sie für Max unmöglich sind! Dennoch weiß er nun den ORT von Max! Tritt das Extremum mehrfach auf, so entstehen mehrere solche Codes.

4.3. Bereichsweise Punkt für Punkt längenreduzierte Codes.

Bekannte CODES VARIABLER LÄNGE enthalten im Code implizit die Information über (bitweise) Verlängerungen. Jeder Wert ist damit codierbar. Wahrscheinliche Codeworte bleiben damit kurz, unwahrscheinlichere Codes werden erheblich länger. Die implizite Verlängerungs-Information benötigt bits, die man bei bekannter Bereichs-Weite für TEILMENGEN- und ELEMENTAR-CODES erspart:

a) Dem Empfänger (Decoder) sei eine Weite implizit oder explizit präcodiert. So wäre ein Bereich der Weite 18 bisher mit 5-bit-PCM zu codieren. Nun gilt:

b) Alle Codes vom 1. bis 15.Wort (Wert 1110) sind mit nur 4 bit PCM codierbar.

c) Alle Worte ab dem 16. werden implizit um 2 bit verlängert, indem 1111 vorangestellt wird, also 1111.00, 1111.01, 1111.10, 1111.11 (ohne Punkt!) Die restlichen Werte (16. bis 19. Wort) wurden mit dem 2-bit Post-Code des Zusatz-Offsets ab 15, (00,01,10,11 hinter Punkt) für 15,16,17,18 codierbar!

d) Oberhalb bestimmter Werte übersteigt die mittlere Codelänge den Gewinn. Man hat dann immer noch die Möglichkeit, z.B. das 15. und 16. Wort dafür zu reservieren, um anzugeben in welcher Hälfte ein übersteigender Wert, z.B. im Bereich 14...21 liegt (14...17, 18...21). -Dort genügen wieder + 2 bit!

e) Reservierte Worte teilen generell mit, in welchem Teil anderer Bereiche (Hälfte, Quadrant...) Werte (-Mengen) liegen. Dazu lassen sich beliebige innere Code-Worte jedes Bereichs reservieren. Mit wachsender Bereichs-Größe reserviert man dazu möglichst immer mehr Code-Worte um Bereiche oder Einzelcodes mit optimaler mittlerer Codelänge zu codieren. Die bekannten Grenzen erlauben, anders als bisher, den Verzicht auf implizit codierte Verlängerung!

4.4 Zusammengesetzte Codes, Prä-Codes, verfeinernde Post-Codes

Codes mit gegebener CL können ab Min nur positiv und ab Max nur negativ sein! "Übrig bleibende" Codes, gemäß 4.2, 4.3, sind z.B. nutzbar als

a) Präcodes für einfache,doppelte... Erweiterung/Verengung des nächsten EB,

b) Postcodes (Nach-Codes), wo Stufungen zu grob oder Bitzahl nicht reichte,

c) je ein Code (je 1 bit true/false) für jede von n Vektor-Komponenten,

d) direkter CL-Code für den nächsten EB, wert-, adress- und zeitbezogen,

e) erste bits eines beliebigen späteren Bereichs- oder Punkt-Codes,

f) Codes zur Fehler-Korrektur bzw. nachträglicher Verfeinerungs-Code,

g) zusammengesetzt zu lesender (segmentierter) Code, vgl. Mehrfach-Extremum.

4.5. Feinstufung der Binärskala für Bereiche gemäß 3.2

Kleinere Nachbar-Blöcke ändern sich selten um eine doppelte/halbierte Skala! Die Binär-Skala mit den 8 Nummern 2,4,8,16,32,64,128,256 ist mit BZ(CL) = 3 bit codierbar. 16 "Nummern", z.B. 1.5, 2.3,4,6,8,12,16,24,32,48,64,96,128,192,256 sind mit BZ = 4 bit für CL = 16 codierbar. Damit ließen sich die Teilbereiche gemäß dem Schema 3.2 hierarchisch feiner stufen. Der Mehraufwand für den Block reduziert die Menge der Punkt-Codes im Sinne der weiteren o.g.Verfahren. Die "halbe Nummer" 1.5 ist hier als 0 nutzbar. Mit BZ = 5,6,.. und noch feinerer Stufung, gibt es immer mehr redundante Werte, nutzbar gemäß 4.2c. Für Extrema-Umgebungspunkte ist als EM (EB für CL) ein Wahrscheinlichkeits-Bereich wählbar.

4.6. Laufende Blocks, Segmentierte Codes - vgl. DBPCM

Ein Punkt V, der z.B. mit dem VORHALT x = 16 vor einem Codierpunkt P läuft, sucht in y-Richtung nach (relevanter) Block-Information (Y-Vektor). Die so gesammelte Information ist auf die Zeit bis zum Erreichen von P (Distanz V-P) verteilbar (s.DBPCM III,3b). Optimiert können PROZESSOREN feste Blöcke, speziell parallel, vorverarbeiten. Ein Prozessor erfragt, (z.B. ebenso) über die Blöcke "laufend", ihre Codemenge. Der Informationsgehalt mehrerer Blöcke wird zeitlich verteilt.

5. Der Begriff PRÄDIKTION bei Bereichen: Einige Prädiktions-Arten

Block-Weiten können präcodiert werden (Prädiktion nullter Ordnung). Bei o.g. willkürlicher Prädiktion kann, z.B. ausgehend von CL = 4, bitweise top-down und bottom-up korrigiert werden. Bei echter Prädiktion kann ein benachbarter vermutlich korrelierender Bereich übernommen (A-Prädiktion) oder ein Bereich aus der Vergangenheit irgendwie anders abgeschätzt werden.

## 6. Rekonstruierbarkeit

Die Übertragungsfolge benutzt eineindeutige (invertierbare) Codierungen, die empfangsseitig (Aufzeichnungen inbegriffen) rekonstruierbar sind, ähnlich wie bei bekannten CODES VARIABLER LÄNGE, wo der Empfänger aufgrund von definierten Bitfolgen die Codes separiert. Dies ist für alle Module des Verfahrens gegeben. Zutreffend prädizierte Bereiche enthalten die realen Grenzen (z.B. Min, Max), definiert durch einen beliebig geformten, reduzierten Funktions-Adressbereich. Erfindungsrelevant ist die erzielte SIGNALADAPTIVE CODE-SELBSTSTEUERUNG durch:
1.
   a) MIN-(D)PCM, MAX-(D)PCM - oder (MIN. und) der OFFSET-BEREICH bis Max.(PCM),
   b) einen beliebig groben BEREICHS-CODE, z.B. die Codelänge CL oder BZ von CL,
   c) Einstiegs-Stufe, Nummer eines Bereichs, der CL(EB), der BZ(CL)..., usw.
   d) Die Frage von ABLAUF-ALTERTNATIVEN (welche bitsparender codiert).

2. BEREICHS- und RELEVANZ-AUSSAGEN (der Vergangenheit) mit 1 bit true/false für:
   a) Bereiche (von...bis, enthält...) und deren ausreichende Code-Längen CL,
   b) (den Bereich einer Menge von) Extrema, speziell (mehrerer) Min(i) oder Max(i),
   c) innerhalb oder außerhalb, kleiner oder gleich, größer oder gleich, die Auswahl-Nr. eines Teilbereichs, entsprechend definierter Wahrscheinlichkeit.
   d) Vorbekannte Exklusionen, speziell innerhalb sukzessiv reduzierter Skalen, bei MONOTONIE unter Einbeziehung codierter Mengen: Sind 8 von 16 Punkten (Werten) adressiert, genügen 3 bits zur Adressierung jedes weiteren, usw.

3. SUKZESSIONEN, speziell als top-down Schachteln des Funktions-Adress-Bereichs:
   a) Sukzessive Sequenz: Die ERWARTUNGS-BEREICHE für alle UNTER-MENGEN sind, z.B. innerhalb CL, mittels sukzessiv längenreduziertem PCM-Wert codierbar.

b) Relevanzabhängig kann es vorkommen, daß die volle Codier-Tiefe von 8-bit-PCM nicht erreicht wird. Daher sollte der Wertebereich (z.B. 0...255) gemäß 3.2f für eine Aussage sukzessiv, z.B. mit je einem true/false-bit in 2,4,8... Teilen, funktional immer feiner eingegrenzt werden.

c) Nach Festlegung der Code-Längen erfolgt in Kombination mit dem QUAD-TREE (vgl. RBN, Abb.), ganz analog(!), ein sukzessiv feineres Adress-Raster.

d) Bitwechsel an benachbarten QUAD-TREE-Positionen (Rechteck-Ecken, Abb.IId) weisen darauf hin, daß gemäß a) eine Halbierungs-Grenze des EB für a) durchschritten wurde (PM, s.o.). Statt einer RBN-Interpolation kann mit 1bit angegeben werden, ob beide Punkte einen EB für die Inneren Punkte begrenzen. Wenn ja,so liegt für alle inneren Punkte ein kleinerer EB vor.

e) Im Dreidimensionalen würde die QUAD zum OKTANT. Die koordinatenweise,nur aktivitätsabhängige Teilung erweist sich (hier) aber als vorteilhafter.

## VI) ALLGEMEINE VORTEILE

### 1. Generalisierte BPCM und DBPCM (GBPCM)

Direkte Bereichs-Präcodierungen und Schätzungen sind meist zu gezielt. Es wurden Möglichkeiten der sukzessiv schärferen Codierung bzw.FOKUSSIERUNG eines EB genannt. Fehlerfälle decken RM-Codes mit programmierter Bereichserweiterung ab, die danach durch top-down-Schachtelung doch zu beliebiger genau werden. Initiale Vergröberung unter Einbeziehung aller PCM-Adressraum-Koordinaten und Komponenten führt zur GENERALISIERTEN BPCM (GBPCM), dem ersten Verfahren, daß es, unter Nutzung aller Gegebenheiten, ermöglichen dürfte:

a) Beliebig viele Übertragungszyklen, bei ganz erheblicher Datenreduktion, ohne den geringsten Verlust durchlaufen zu können.

b) Mit geringer Redundanz, auch ohne Bitfehler-Korrektur, Codierfehler ausmerzt.

c) dennoch in planar-zeitlichen Volumina IK (z.B. Zeit-Quadern) mit weniger als 1bit/pel codieren und möglicherweise sogar die heutigen TV-Kanäle, bei gesteigerter PCM-(naher)Qualität, nutzen zu können.

d) Bildschnitte, die kein konventionelles Datenreduktions-Verfahren problemlos schafft, über den genzen Bereich (als SEGMENTIERTE CODES) zu verteilen,

e) MONOTONIEN (stetig größer/kleiner), wie Aus-/Einblendungen sind nun nutzbar

### 2. Absolute Genauigkeit bei großer Datenfluß-Reduktion durch GBPCM

Die Effizienz des Verfahrens ist bei optimaler Codefolge nur durch Rauschen und den zulässigen Verzögerungsfaktor beschränkt. Ideal ist die sendeseitige GBPCM eines möglichst großen Informationsblokkes in x,y z = t... - Dies wird nur durch Rauschen und die Signal-Varianz jenes INFORMATIONS-KÖRPERS IK beschränkt. Das Verfahren eignet sich für jede Merkmals-Funktion. Enorme Punktmengen sind mit Null bit codierbar (IRRELEVANZ-BEREICHE) und werden eliminiert. Bei PCM-Qualität werden (aktivitäts-abhängig) enorme Datenfluß-Reduktionen erzielt.

### 3. BPCM-Schnelligkeit, HDTV, einfaches Schaltungs-Schema, - Abb. IV, unten

Die rasche Bestimmung der Extrema jeder SIGNALMENGE S(IK) ist durch Vergleicher um Zehnerpotenzen schneller möglich als bei den komplexen Rechenoperationen und Algorithmen konventioneller Datenreduktions-Verfahren:
Die feste sendeseitige (gespeicherte) Signalmenge S durchläuft den Quantisierer und wird gespeichert. Der 1.Wert steht danach sofort als P(min) und P(max) zur Steuerung an. Jeder neue Wert korrigiert über Differenzen-Bildung zu P(min) und P(max) die letzteren oder liegt dazwischen. Grenzen (Extrema) reduzieren so implizit die erforderliche Skalenweite CL. Liegt eine feste top- down Struktur EB(i) vor (Schachtel i = 1,2,3...), so liegen alle P(i),min,max der EB(i) geordnet gespeichert vor. Der ANALYSATOR liefert nun zusätzliche Steuer-Codes, z.B. über zutreffende Abschätzungen, und schaltet bei Nichtzutreffen das Vorgehen. Der reversible Code wird dem Sender mitgeteilt. Das schnelle Verfahren genügt HDTV-Qualität und ist wegen der Einfachheit preisgünstig!

## 4. Universalität, Normierte Blöcke

3-dimensionale Initialräume von 64x64 Abtast-Punkten (pixel) in 4...16 Bildern sind zweckmäßig. Mittels GBPCM werden diese IK sukzessiv immer feiner codiert. Eine relevanz-bedingte sukzessive Halbierung in den Koordinaten x,y,z bietet sich zur Standardisierung zwecks Übertragung ihrer EB(i,j) an. Alle möglichen Amplituden-Koeffizienten jedes Verfahrens, z.B. DPCM- oder auch ACT-Koeffizienten werden darin um 1bit je Halbierung eingeschränkt. Definierte Zeit-Intervalle (1 sec) werden zur Sendung eines Prefix der Codier-Parameter, wie die Information über variable Blockungs-Faktoren, Ablauf-Variationen, usw., genutzt. Bei Invarianz in der z-Achse werden die Blöcke längs z möglichst groß, was bei Aufzeichnungen beliebig weit möglich ist. TV und Bildtelefonie lassen als Varzögerung ca. 4...16 (S4) Bilder (von ca.60/sec) zu. MONOTONIE-GESETZE oder andere Nachbarschafts-Sukzessionen (-Korrelation!) für Aussagen (EM/RM), erlauben bitsparende ACT oder BEREICHSREDUZIERTE DPCM.

## 5. Anwendung bei digitaler Telefonie, Bild-Telefone

Für Bildtelefonie ist GBPCM (auch als Preprocessing!) verwendbar, um (danach) existente Methoden in blockweise eingeschränkten Bereichen anzuwenden. Zudem kann der ISDN-Sprachkanal mit 64kbit/s vorteilhaft einer GBPCM unterworfen werden, um die Kanalbreite zu reduzieren: Die o.g. Verzögerung erlaubt eine grobe Sprach-Segmentierung. (Analoge) Differentiation D der Sprachsignal-Menge S führt, speziell durch Auswertung der Hüllkurven-Verhältnisse D/S zu einem sensiblen Indikator für Grenzen der relevanten Bereiche. Relative D/S - Konstanz bedeutet relative Invarianz. Übliche Frequenz-Analysen werden darin zusätzlich zur quasinatürlichen Segmentierung herangezogen! Damit natürlich segmentierte Initialblöcke von ca. 10-120 ms Länge bieten eine hervorragende Basis, um z.B. im dreidimensionalen Raum von Amplitude, Frequenz und Zeit (einem BILD völlig äquivalent) eine effiziente GBPCM zu gewährleisten. Derart, als "Doppelbild" wird die 128kB-Breite der Bildtelefon-Kanäle im Schmalband-ISDN auf Bild- und Sprache verteilbar! Wer Verzögerungen akzeptiert, "video-phoniert" billiger.

## 6. Bewältigung hoher Signal-Aktivität durch segmentierte Codes

Bei hoher Aktivität (Relevanz) kann es bei jedem (auch diesem) Verfahren zur Kanal-Überlastung kommen. Man bedarf sinnvoller (hierarchischer) Segmentierung:
-Die o.g.Blöcke werden nacheinander abgetastet und nur bis zu einer definierten Informations-Tiefe übertragen. Sind nämlich die Extrema ausreichend kleiner Teilbereiche bekannt, so kann man dazwischen notfalls (auch nichtlinear) interpolieren, als SCHÄTZ-FORMEN annehmen! - Darauf kann man erneut aufbauen! Sender und Empfänger speichern das daraus rekonstruierte Signal (REFERENZ-BILD).
-Man kann gem. V,4.3 Codeworte zur Lokalisationen im Folge-Bereich reservieren, z.B. mit CL=4 die 1110 und 1111 für 2 Präcodes eines Folge-Bereichs mit CL=5, 4 Codes, z.B. 11100,11101,11110,11111 für einen Folge-Bereich mit CL=6, usw...

## 7. Roboter-Sehen

Um Robotern suchen zu lehren, werden Bilder initial künstlich unscharf gemacht und damit gröbere Raster als der Punkt realisiert. Danach wird wieder schärfer codiert. Diese Umständlichkeit wird durch das neue Verfahren eliminiert: Die Hierarchie beginnt auf einer unscharfen Stufe und wird sukzessiv schärfer. Die Objekt-Suche wird gemäß Abb. IIb bottom-up und top-down verbessert.

## 8. Reduktion des Adress-Bereichs durch Vektor-Codierung mehrerer Merkmale

Alle Werte innerhalb der BPCM-Teilskala (100,140) sind mit 6 statt 8 bit PCM codiert. Auch der oben unter IV, 4aa,5 beschriebene Vektor-Bereich (A,B,C,) ist mit seinen Komponenten im punktgenauen Bereich (35...45 Grad, 10...15 Grad und 60...100), also (10,5,40), mit (4,3,6 bit) exakt codiert. Der RAUM 10x5x40 mit 2000 Adress-Punkten ist jetzt, staff mit $4+3+6 = 13$, mit nur 11 bit codiert. Dies ist gegenüber 3-dimensionalen PCM-Codes ($8+8+8=24$ bit) eine Halbierung. Je Koordinate ergeben sich im Mittel 0,4 bit. Die (PCM)-PRECODES (CL, Extrema) verteilen sich auf die Menge. Für die Teilmengen im Innern nimmt der Gewinn weiter, doch immer weniger, bis zu einem Optimum zu.

9. Verbreitete Vorurteile und Irrtümer, Sukzessive Nutzung erlaubter Unschärfe

a) Ein Irrtum beruht auf der Vorstellung,man müsse den EB1 punktgenau begrenzen und codieren! Erfindungsgemäß genügt die initial sehr unscharfe,dann sukzessiv feinere Codierung (2.,3.,..Codier-Durchlauf), jedes mehrdimensionalen IK. Für jede zusammenhängende Signal-Teilmenge EB2 reichen initial grobe, dann feinere Lokalisierungen im EB1! Letztere sind initial (z.B. sogar mit 1 oder 2 bit) zwar vorerst ungenau, doch prinzipbedingt immer weiter präzisierbar (genauer) innerhalb EB1 zu lokalisieren. Was für Beträge (z.B. Luminanz) gilt, gilt für mehrdimensionale Vektoren, Adressen, und Kombinationen ihrer Mengen analog.

b) Ein weiterer Irrtum ist, daß die Bereichs-Prädiktion bei "unvorhersehbaren Ereignissen", wie konventionelle Verfahren, einfach versagt. Das mit 1 bit codierte Versagen löst vielmehr RESTMENGEN-CODES aus,die den korrekten Bereich wieder sukzessiv zentrieren. So bleibt eine BPCM immer beliebig genau.

c) Ebensowenig müssen, bei hocheffizienter top-down Codierung gemäß V,3,2, die anfangs noch unbestimmten Randwerte unbedingt schon bei der Bestimmung der Weiten jedes Teilbereichs einbezogen werden, da auch sie notfalls noch mittels RM-Code genau codierbar werden, bei Extremwert 111...z.B.: + Testbit + 2.Code.

d) Schon BRITISH TELECOM verwirft durch die Praxis (1bit/pel) ein verbreitetes Vorurteil, daß der "overhead for such a scheme would be very large" (WO-86/04757 S.4, Zeile 20ff.), gemäß dem hier unter II,4.4 beschriebenen Teil-Verfahren. Die hier verallgemeinerte BPCM ist aber umfassender. Vergröberung und Nutzung (RELATIVER) EXTREMA-STÜTZWERTE wird, incl. Interpolation, möglich. Nur ein kleiner Teilaspekt ist also, sehr treffend, durch BT vorformuliert!

## VII) AI-SYSTEME (AI - Artificial Intelligence)

Das Verfahren beschreibt eine WISSENSBASIERTE RELEVANZ-IRRELEVANZ-GESTEUERTE SIGNALCODIERUNG. Top-down-Schemata sind ein bekanntes Merkmal von AI-Systemen. Die Begriffs-Begrenzung als BEREICH führt bisher zu Widersprüchen, da reale Grenzen "fließend" sind. Bildsignal-Analysen sind ein gutes Beispiel für AI-Systeme. Durch die Anschaulichkeit der BEREICHE lassen sich viele Aussagen ableiten, die bei der Analyse anderer realer, ABBILDBARER VORGÄNGE gelten:
- Die üblichen Einordnungen true/false sind durch BEREICHS-LOGIK zu ersetzen.
- PUNKTUELLE AUSSAGEN (z.B.: $X=5$ ist true/false) sind von BEREICHS-AUSSAGEN, wie X liegt innerhalb von A und B (beschränkte abgeschlossene Menge), zu trennen.
- BEREICHS-LOGIK prädefiniert den Gültigkeitsbereich incl. dem RAND einer Aussage.
- Durch das EXKLUSIONS-PRINZIP RML,RMC sind Aussagen mit weniger Stellen codierbar.
- Ein EB12 ist in einem EB1 auch durch negative Teilmengen RMC, RML auffindbar.
- Mehrdeutigkeiten werden eingeschränkt, was Ablauf- und Aussage-Logik präzisiert. Widersprüche zu einer RMC und Unmöglichkeiten RML werden deutlich.
- Die Logik kann sogar mehrere Aussagen als Vektorfunktion auswerten.
- Korrelations-Funktionen verweisen zudem auf (Un-)Wahrscheinlichkeiten!
- Von Bereich zu Nachbar-Bereich soll (muß?) STETIGE FORTSETZUNG möglich sein.
- SINGULARITÄTEN (Ausnahmen) besitzen keine nahe Umgebung ( = kein Häufungspunkt).

## VIII) KORRELATIONS-SUCHE, RAUSCHMINDERUNG, BEISPIELE

Das Konvergenz-Prinzip wird nur bei Schachtelung sehr großer Blöcke IK(x,y,z) optimal wirksam! Ein großer IK mit einem Extremum, z.B. MIN1 sei Ausgangspunkt für eine nun beschriebene Elementarstufe ik-(x,y,z) der ganzen Hierarchie. Die folgenden differentiellen Punkt-Aussagen gelten z.T. auch für IK-Teilbereiche!

Beispiel 2.1:

Innere und Block-zu-Block-Varianz von 2 Elementar-Blöcken mit je 2x2 = 4 Punkten für punktgenaue BPCM nach präcodiertem Extremum (z.B. Minimum):

```
        ik1             P(max) - P(min)        ik2                    ik3
       (16  12)           = v = Varianz       (11  10)              (06  01)
       (18  16)                               (16  14)              (09  00)
   v11 = 18 - 12 = 6;  v(max,1,2) = 18 - 10 = 8;  v22 = 6;  v(max 23) = 16;  v33 = 9
   Codelänge: cl = 3                    cl = 4    cl = 3         cl = 5    cl = 4
```

Bei planarer punktgenauer Schachtelung top-down bis zum PCM-Wert, erreicht man mit BPCM selbst bei Quellen-Codierung, je nach Bereichs-Aktivität,kaum weniger bit als hier gezeigt (2...5 je pixel). Der Funktions-Bereich F über der X-Y-Fläche ist ein Quader (X2-X1,Y2-Y1,Z2-Z1), also dreidimensional! In statischen Blöcken x,y,z einer Bildfolge ist der Codier-Aufwand dafür zeitlich verteilbar!
- Abb.IV, oben: Funktionsfläche
- Abb.IIc, weißer Pfeil: statischer Funktionsraum

Beispiel 2.2:

Punkt-Differenz gleicher Positionen benachbarter Elementar-Blöcke:

```
             ik1            -          ik2      =   dik(12)
           (16  12)         -        (11  10)   =   (03  02)
           (18  16)                  (16  14)       (02  02)
       v11 = 6   v(max,1,2) = 8      v22 = 6       v(dik) = 1
       cl = 3            cl = 4      cl = 3        cl  = 1
```

- Während der Doppelblock ik1 + ik2 noch eine hohe Varianz von v(max 1,2) = 8 aufweist, also 4 bit benötigt, kommt jeder Sub-Block hier schon mit 3 bit aus und jeder Punkt des Differenzen-Blocks dik(12) bereits mit nur noch 1 bit. Je größer die Stetigkeit desto weniger bit/pel sind erforderlich!
- Da Differenzen-Blöcke mehr Codieraufwand benötigen können, als ein IK der Original-Funktion S, sind Sender nach Block-Analysen in der Lage, dem Empfänger programmiert den günstigsten Weg mittels Prefix mitzuteilen (geschaltete BPCM/DBPCM/ACT/RBN/DPCM usw.) um die mittlere Bitzahl weiter zu senken. Codierte Elementar-Differenzen (Differentiale, GRADIENTEN) sind ansonsten ebenfalls wie Bilder speicherbar und bei exakter BPCM-Codierung wieder zum Bild integrierbar!

Beispiel 2.3:

Block-Differenz zweier Spalten mit je 2 Punkten für DBPCM.

| ik11-ik12 = dik(spalte), | cl(dik); | ik21-ik22 = dik | cl(dik) |
|---|---|---|---|
| (16 - 12) = (4) | 3 | (12 - 10) (2) | 2 |
| (18 - 16) (2) | 2 | (16 - 14) (2) | 2 |
| (20 - 15) (5) | 3 | (15 - 14) (1) | 1 |
| v(dik) = 5-2 =3 | 2 | 2-1 =1 | 1 |

Das Schema zeigt einen spaltenweisen X- (oder: Z-)Gradienten. Die reihenweise Änderung von cl umfaßt hier, idealisiert, nur noch je zwei Werte ( = 1 bit)!

## 3. Verbesserung: Elimination des Rauschens über den Z-Gradienten für BPCM

Erst die Elimination des Rauschens erlaubt die optimale Konvergenz der BPCM. Wenn vorige planare Glättung (Filterung) zu Kanten-Unschärfe und Zerstörung feiner Strukturen führt, ist sie unzweckmäßig. In Bereichen ohne wahre (nur vom Rauschen erzeugte) z-Varianz bleibt der Signalwert längs der z-Achse im Mittel konstant, d.h. die Änderung DIK wird im Mittel Null. Rauschen ist so längs der z-Achse eliminierbar (z-Filterung,Mittelwertbildung,Integral der dik ca. Null!). Die resultierende Rauschfreiheit reduziert den INFORMATIONS-GEHALT ideal, da mathematisch ein ZYLINDRISCHES PROBLEM entsteht, also nur die ebene Struktur zu codieren ist. Der planare Codier-Aufwand wird daher zeit-räumlich verteilbar, was schon über 4 bis 8 Bilder zu einer Bitrate unter eines führt,
- vgl. hellen Pfeil der Abb. IIc

## 4. Bewegung: Rauschminderung durch Suche nach Bewegungs-Koordinaten "c"

Beispiel 4.1:

Suche minimaler Block-Differenz als Raumrichtung zweier Spalten

### 4.1.1 Benachbarte Differenzen  4.1.2 Entfernte Differenzen: Korrelation s4 zu s1

| s1 - s2 = d12 | s1 | s2 | s3 | s4 | mit s43 - s11 = 0 |
|---|---|---|---|---|---|
| (11 | 11 | | | | |
| (16 - 12) | 16 | 12 | | | d(11+,43+) |
| (18 - 16) = (-1) | 18 | 16 | 13 | 11 | 0 |
| (20 - 19) ( 0) | 20 | 19 | 17 | 16 | 0 |
| - 21) (-1) | 19 | 21 | 20 | 18 | 0 |
| (-1) | | 20 | 22 | 20 | 0 |
| | | 19 | 18 | | (1) |

Bei Bewegung ist eine Rauschminderung längs dem bekannten VERSCHIEBUNGS-VEKTOR möglich: Die Suche nach Linien minimaler Änderung (höchster Korrelation) führen zu einer Art "C-Gradienten" längs der Verschiebungslinien c (statt z):

Fall 4.1.1 zeigt die vorbekannte Bild-zu-Bild Korrelations-Suche s1 - s2. Der Raumvektor C der VERSCHIEBUNG wird durch Vergleich ermittelt und liefert Raum-Linien c von C. Einfacher ist es aber, ERSTE C-VEKTOREN durch die Suche nach planaren Funktions-Extrema (primär Gradienten-Extrema,sekundär -Nulldurchgänge) oder durch bekannte Verfolgung ebener Relevanz ("Ecken" des X,Y-Grandienten, Konturen!) in der Zeit zu finden, um den ADRESS-BEREICH (range) zu beschränken.

- Abb.IIb: Korrelations-Raumlinie c

Statt jener MINIMA der dik(z) oder dik(c) der Original-Signals S wird dazu die Sequenz der X-, Y-Gradienten, wie eine S-Bildfolge verwendet, analog ABB IIc: Die zeitliche Relevanz-Verfolgung über BLÖCKE PLANARER GRADIENTEN funktioniert selbst bei höherem Rauschen (Konturen liefern maximale Gradienten-Werte). Eine Verfolgung der geometrischen Orte von Konturlinien im X,Y-Gradienten ist mit sukzessiver (notfalls bottom-up,sonst top-down) den Adressraum einengender BPCM z.B. sehr einfach: Im präcodierten oder korrekt geschätzten (planaren) Bereich wird die Relevanz (Kontur) grob zeit-räumlich verfolgt, dann eingeengt.
- Abb.IIb: Kegel-Schachtelung für c

Hierarchisch-räumliche Einengung nach ersten Eigen-Koordinaten (Vektoren):

Zwischen ERSTEN VEKTOREN als Adressraum (z.B.innerhalb der aufgefundenen Kontur) sucht man, möglichst hierarchisch, SEKUNDÄRE (schwächer korrelierende) Punkte, speziell RELATIVE EXTREMA innerhalb einer Kontur. Dazwischen liegende TERTIÄRE Punkte sind in sukzessiv reduzierten Skalenbereichen jener Gebiete codierbar! Die generalisierte BPCM, als KONVERGENZ-VERFAHREN kann nun, von groben Initial-Bereichen ausgehend, sukzessiv präziser Bereiche codieren (BEREICHS-FOKUSSIERUNG)
- Abb.IIb: c-Suche - Abb.IIc, dunkler Pfeil = Objekt innerhalb c(i)

Fall 4.1.2:

Längs der z-Achse sind auch weiter entfernte Differenzen nützlich, um den BEREICH EINES RAUM-VEKTORS vorerst grob zu ermitteln. Vereinfacht liegt der Fall vor, daß man fast die exakte Struktur im 4.Bild in Form der nahezu idealen Spalten-Differenz Null für 4 von 5 Punkte (punktgenauer Vektor) vorfindet. Anschließend wird in einem sinnvoll abgeschätzten RAUMBEREICH zwischen Signal s1 und 24 die c-Linie gesucht: Enthält er die Linie, so wird er bis zu wahren Punkten verengt, enthält er sie nicht, so wird er vergrößert,bis er sie enthält (mit einem bit mitteilbar) und anschließend sukzessiv verengt. Dies führt zur Adressierung realer Punkte innerhalb eingeschränkter Adreß-Räume. Der so verallgemeinerte "Suchkegel" setzt sich beliebig krummlinig in den Raum fort: Der (planare) Kegel-Bereich zur Adressierung bis s4 (analog für s5...7) ist abschätzbar, notfalls bottom-up (mit je 1 bit!) erweiterbar, bis er die Realität enthält.
- Abb.IIb

5. BEREICHE zwischen krummlinigen Bewegungs-Koordinaten, Struktur-Suche

a) verfolgt man statische Flächen im Zeit-Raum, so verteilt sich der planare Codieraufwand auf den ganzen in x,y,z durch "c-IRRELEVANZ" definierten Raum. Da (Änderungen der) X,Y,Z-Gradienten bei Invarianz längs der z-Achse minimal werden, eignet sich umgekehrt jede Art extremaler (In-)Varianz zum Aufsuchen von c-Linien im Zeitraum, dem sog. EIGENVEKTOR längs "c" ("correlation lines") Selbst Block-Schwerpunkte eignen sich zum Auffinden von EIGEN-KOORDINATEN. Primäre, sekundäre und tertiäre c-Linien sind jeweils vereinfacht als BILDFOLGE von zugeordneten 1-BIT-MERKMALCODES speicherbar.

b) BEWEGTE FLÄCHEN liefern durch (Ir-)Relevanz-Verfolgung längs der z-Achse "c"-Linien und davon krummlinig begrenzte, quasistatische, quasizylindrische Blöcke. Die INNEN-GEBIETE ausgeprägter c-Linien (z.B. von Konturen) eignen sich wiederum zum hierarchisch-sukzessivem Auffinden immer weniger ausgeprägter c-Linien von im Innern liegenden Teil-Gebieten. Folgen längs "c" GEBIETE HOHER KORRELATION aufeinander, so gestatten sie RAUSCH-MINDERUNG, wie längs den z-Linien (nur bei Bewegung verlassen c-Linien ja die z-Achse!), wenngleich nicht so effizient.

c) Statt der Teilung in allen Koordinaten sollten nur RELEVANTE KOORDINATEN (Komponenten) geteilt werden. Das sei für die z-Koordinate beschrieben: Das Merkmal "I" - IRRELEVANZ längs z ist solange für große/sukzessiv größere Blöcke codierbar, bis es nicht mehr zutrifft. Beim Auftreten von RELEVANZ R wird der Zwischenbereich, hierarchisch ab letzten Merkmals-Code analog Abb. Ia geschachtelt, die so ermittelte RELEVANZ darin selektiert und dann codiert.

d) Die Frage-Inversion, welcher Raum mit 4 bit des MERKMALS(-SATZES) codierbar ist,lokalisiert Suchräume: Während man in y-Richtung progressiv abfragt, ab wo die Skalenweite 16(4 bit) überschritten wird, läßt man diesen ABFRAGE-PUNKT ebenso in x-Richtung wandern. Ein ANALYSATOR selektiert möglichst die größte Fläche. - Gemäß Abb.IIa werden die Seitenlängen als run lengths codiert. Natürlich sind auch diese Blöcke top-down schachtelbar, z.B. für 3 bit, usw.

e) Ein m-dimensionaler Vektor besitzt m Funktionen "über" n Raum-Koordinaten. Alle Koordinaten (n,m) bilden einen (orthogonalen) HYPER-BLOCK, dessen irrelevante (ungeänderte) Koordinaten, z.B. mit je 1 bit, eliminiert werden. Die verbleibenden werden, möglichst präcodiert relevanz-äbhängig, unterteilt. Sie besitzen zudem oft nutzbare Korrelationen (gemeinsame/inverse Monotonie). Ein Objekt besitzt (auch für jeden Punkt) naturgemäß einen ganzen MERKMAL-SATZ.
- s. Abb. III: 4 Extrema von 2 Merkmalen

6. Mehrdeutige c-Koordinaten (Wasserwellen), Bereichs-Korrelations-Verfahren.

a) Die konventionelle und mittels verallgemeinerter (D)BPCM verbesserte Suche nach Verschiebungs-VEKTOREN versagt,wenn der Begriff OBJEKT nicht eindeutig ist: z.B. bei Feuer oder Wasserwellen führt dies zu Mehrdeutigkeiten, da in allen Raumrichtungen "c" der Bildfolge Korrelationen auftreten können. Die Definition von Vektoren wird völlig sinnlos. TENSOREN, Gebilde höherer Art, beschreiben das Verhalten von Spiegel-,Schaum- und residuellen Flächen auch nur solange, wie sie sich (etwa Luftballon-Fetzen ähnlich) nur dehnen. Die Flächen zerreißen auch oft, was mathematisch kaum beherrschbar ist. Die Suche nach Korrelationen ist, so gesehen, wohl ein Irrweg!

b) Ändert sich der Amplituden-Bereich eines Gebiets z.B. von A1 = 200...240 auf A2 = 180..230 (Ausblendung), so versagt die konventionelle KORRELATIONS-DEFINITION. Sucht man dagegen die KORRELATION DER WEITE von A1, speziell von X-(Y-)Gradienten, also der Punkt-zu-Punkt-Differenz in x, so folgt für die Weite: D1 = 240-200 = 40 und D2 = 50. - Gradienten-Selektion analog Abb.IIa

7. Grob-Schachtelung, leere Restmengen, Fokussierung

1. Die Luminanz-Mitte von A1 liegt bei L = 220, die von A2 bei 205. Die Suche nach dem Schwerpunkt 220 führt ebensowenig weiter. Werden, von A1 ausgehend, aber nur Flächen ähnlicher Bereichs-Weite für L als korrelierende Skalen gesucht, so findet man A2 hier als CL-korrelierenden 6 bit-Bereich.

2. Liegt der gesamte Dunkel-Bereich in B1 = 50...80 bei 5 bit Codieraufwand, so liegt eine LEERE RESTMENGE bei RML1 = 81...199. Diese benötigt kein Codewort!

3. Initial ist also die sehr grobe CODELÄNGEN-ANALYSE und -PRÄCODIERUNG sinnvoll, wobei jeweils alle Werte L2(x,y) ab Minimum-Code bis Maximum-Code darstellbar sein müssen. Grob-Aussagen bieten aber auch (sukzessive) 1bit-Codes (PCM!) an:

a) Liegt Min1 (oder Max1) im oberen (unteren Segment) einer geteilten Skala speziell zwischen 0..127 oder 128..255 (jeweils true/false)
aa) Bei abschätzbar engeren Bereichen EB1 ist die logische Aussage, ob sich Min1 und Max1 in der Schätz-Skala befinden, anfänglich meist sinnvoller.

b) Danach wird die Aussage a), oder die immer unwahrscheinlichere aa), mit einem weiteren bit (z.B. auf 0..63, 64..127, 128..191, 192..255) eingeengt.

c) Ebenso läßt sich die geometrische FORM jedes IK zwischen X(min), X(max) Y(min), Y(max)... usw. solange schachteln, bis die Aussage "L-Bereiche A1,B1...,RL1 treffen im Initial-Quader gemeinsam zu" gegen eine Aussage A1 oder B1 oder RL1 konvergieren. Dies eignet sich zur MUSTER-ANALYSE!

d) SCHÄTZUNGEN werden mit true/false codiert, notfalls bottom-up erweitert.

e) Abwechselnd komponentenweise top-down Schachtelung fokussiert Bereiche.

B i l d e r

I a) Typische lineare Luminanz-Funktion der Kante (Kontur): Einfache lineare Division (1/2) selektiert größere und kleinere Skalen für die Mengen EM(ij).

I b) Eine Adressierung t(i), i = 1,2,3... gibt die Adress-Bereiche für zuvor definierte größere und kleinere Skalen an. Die bei der Sendung einer idealen Kante (kleines Bild) vom System verursachte Verzögerung gibt T an. Die HÄUFUNGS-PUNKTE HP(i) werden zu DISTRIBUTIONEN EM(ij).

I c) Vorteilhafter Raum-Block mit großer Punkt-Menge.

II a) Eine gegebene Code-Länge, z.B. CL = 4 für 16 PCM-Werte, wird gewählt, um damit RELEVANTE und IRRELEVANTE Blöcke (R/I) zu selektieren. Auch hier sollte mindestens ein gemeinsamer Rand-Punkt P12 von minimal je 2 Blöcken für die STETIGE FORTSETZUNG einbezogen werden.

II b) Verfolgung eines Objekts über seine Skalen CL und die DISTRIBUTIONEN der HÄUFUNGS-PUNKTE innerhalb seiner Kontur durch Veränderung bottom-up und top-down der Winkel bzw. Flächen.

II c) Bildfolge mit statischen und dynamischen Anteilen (heller und dunkler Pfeil).

II d) Hierarchisch planare Division eines Bereichs, von BRITISH TELECOM (modifiziert). Das FORTSETZUNGS-PRINZIP nutzt Punkt-Werte auf dem Rand.

III ) Verschiedene Volumen-Formen. Das erste Volumen zeigt the Extrema MIN,MAX und min,max von zwei Vektor-Komponenten.

IV ) a) Signalfunktion über der Fläche, b) Schaltung zur Extremwerte-Bestimmung

R e f.

1/ DUSCHEK ADALBERT: Vorlesungen über höhere Mathematik, Band 2, Springer-Verlag Wien, 1963, pp. 32-34.

'4/ WO 86/04757: International patent application, BRITISH TELECOM.

3/ BIERLING M., THOMA R.: Motion compensating field interpolation using a hierarchically structured displacement estimator, SIGNAL PROCESSING 11/86, pp. 387-404, erwähnt vom MUSMANN, TELEMATICA-Kongreß, Stuttgart 6/86.

4/ ZSCHUNKE WILLMUT: DPCM picture coding with adaptive prediction, IEEE TRANSACTIONS ON COMMUNICATIONS, Vol. Com-25, No.11, 1977, pp.1295-1301

5/a) T.KONDO: Adaptive Dynamic Range Coding Scheme, Picture Coding Symp. 1986.

b) T.KONDO et al.: Adaptive Dynamic Range Coding Scheme for Future Consumer Digital VTR, - SONY Corp. (Quelle unbekannt, beigefügt, erschienen ca.10/88).

6/ W.KEHLER, eigene Patent-Anmeldungen:

a) EP 88 113671: Generalisiert bereichsprädiktives Code-Modulationsverfahren Prio.: DE-3738244, 11.11.87; EP-88103905, 11.3.88; EP-88109025, 7.6.88.

b) EP 87 1052227, publiziert: EP-0244660-A2, 11.11.87: Relevanz-und irrelevanzanalytisch bereichsprädiktives Code-Modulations-Verfahren

c) Europäisches Pat. 0091979-B1 (pat. 30.12.86): Bereichsprädiktives Code Modulations Verfahren mit signaladaptiv reduzierter Bitrate, z.B. Seite 7ff.(Anspr.), S.3 (2.1 + 3.1), S.6 (1.4), S.7 (2.5 + 3).

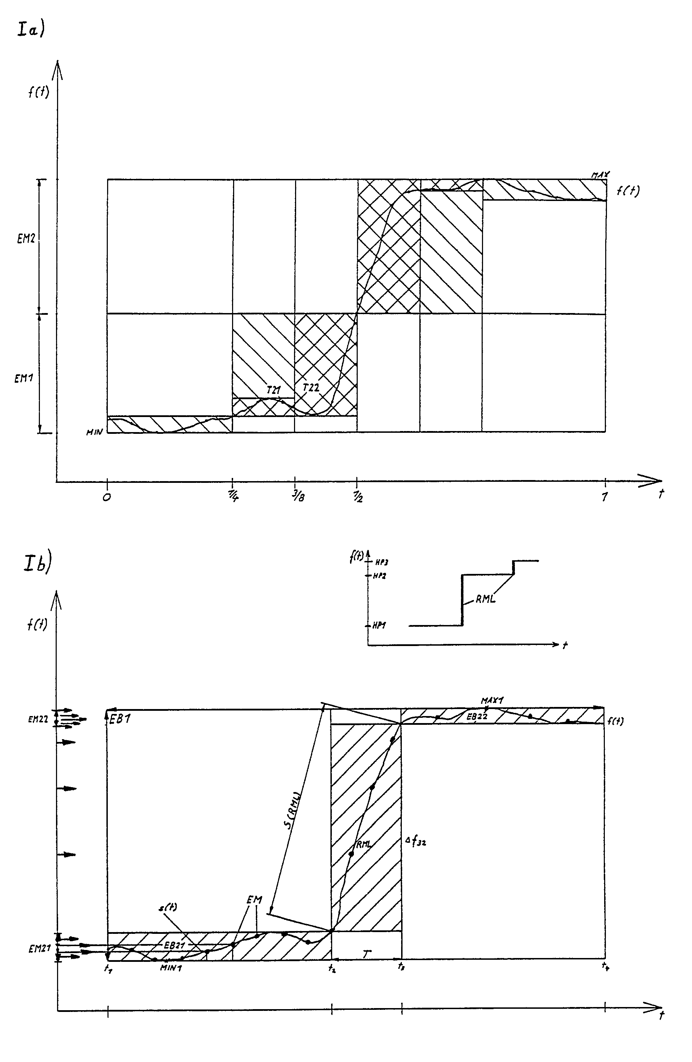

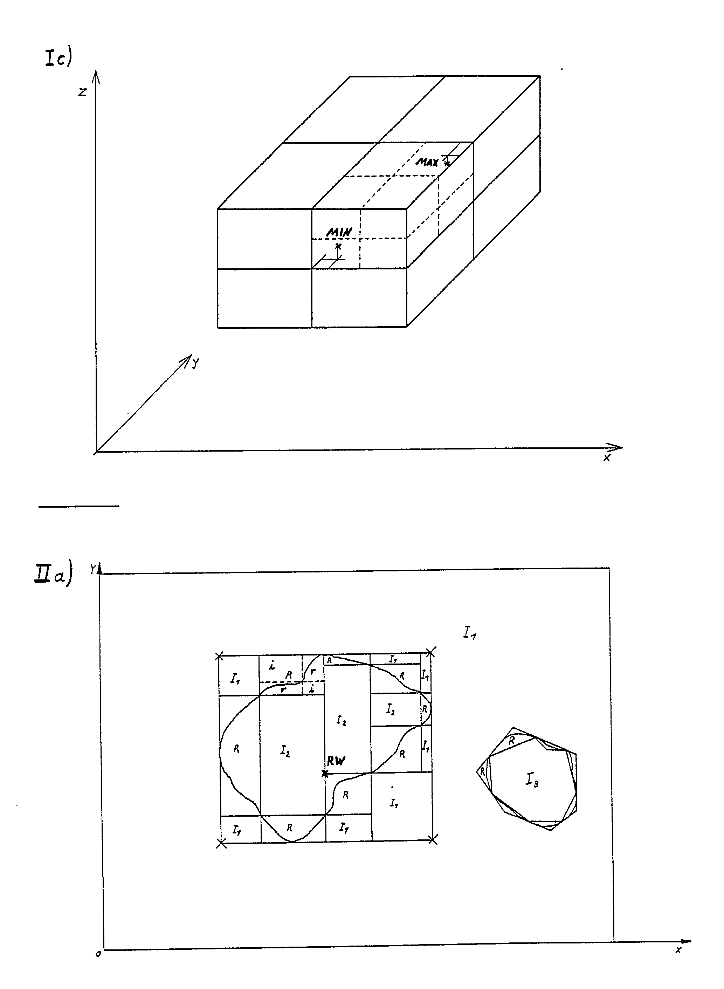

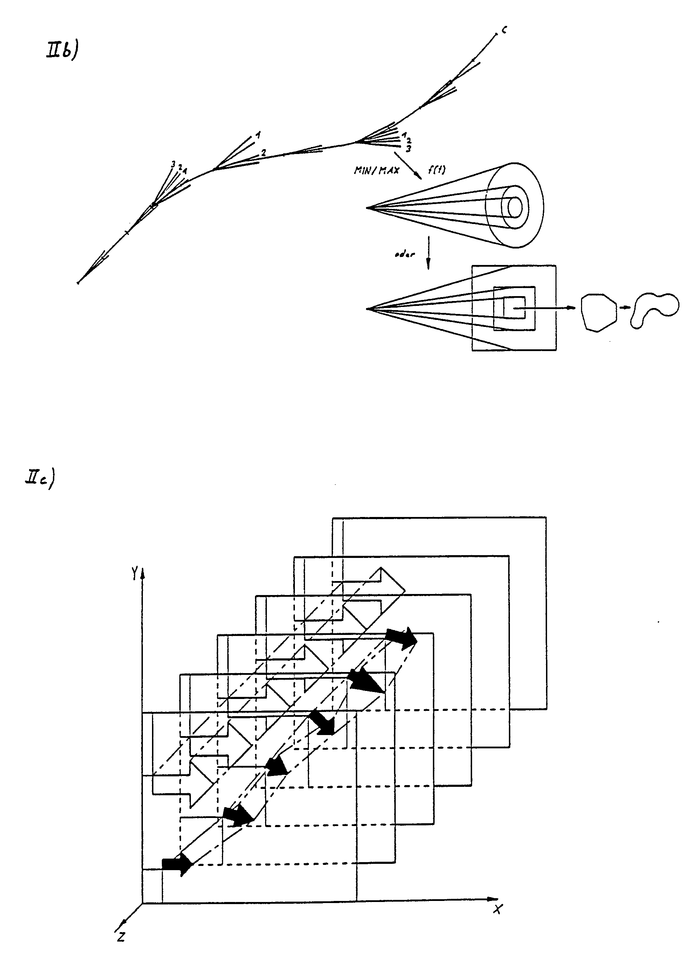

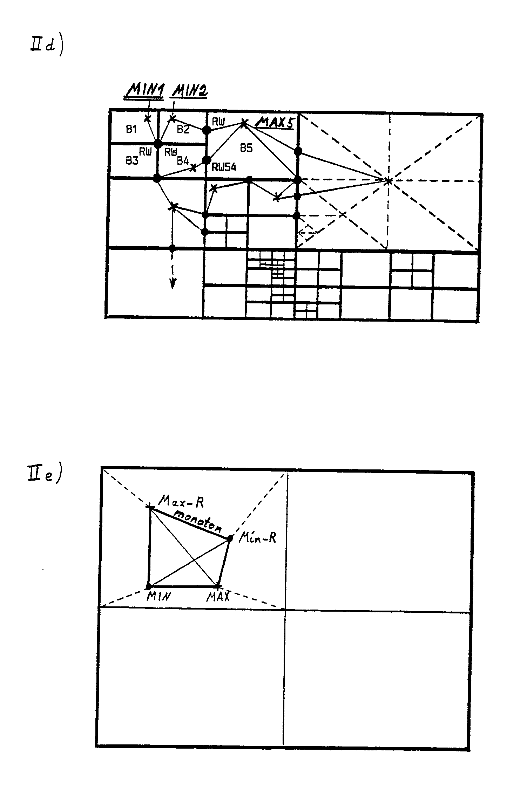

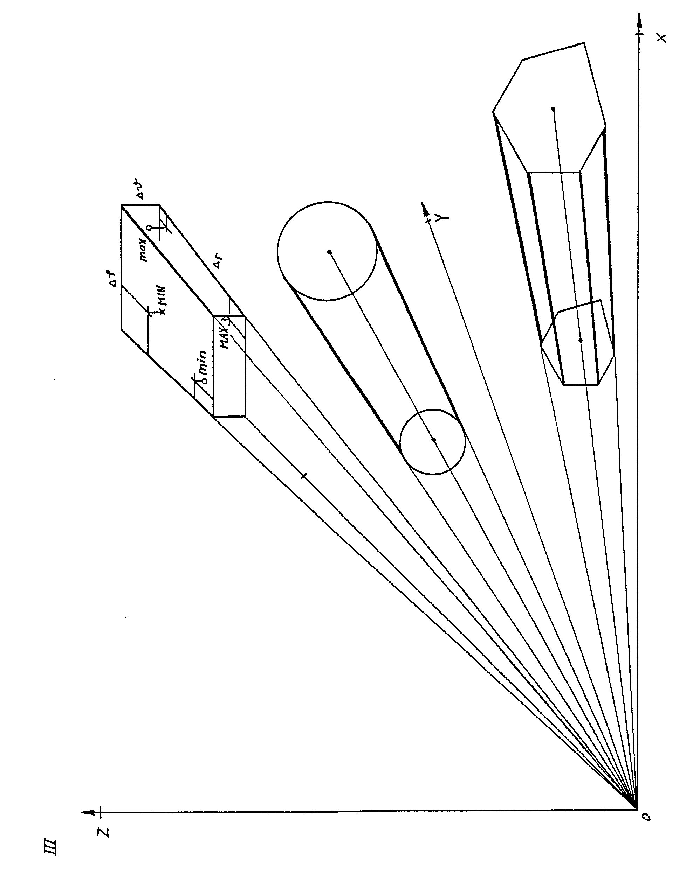

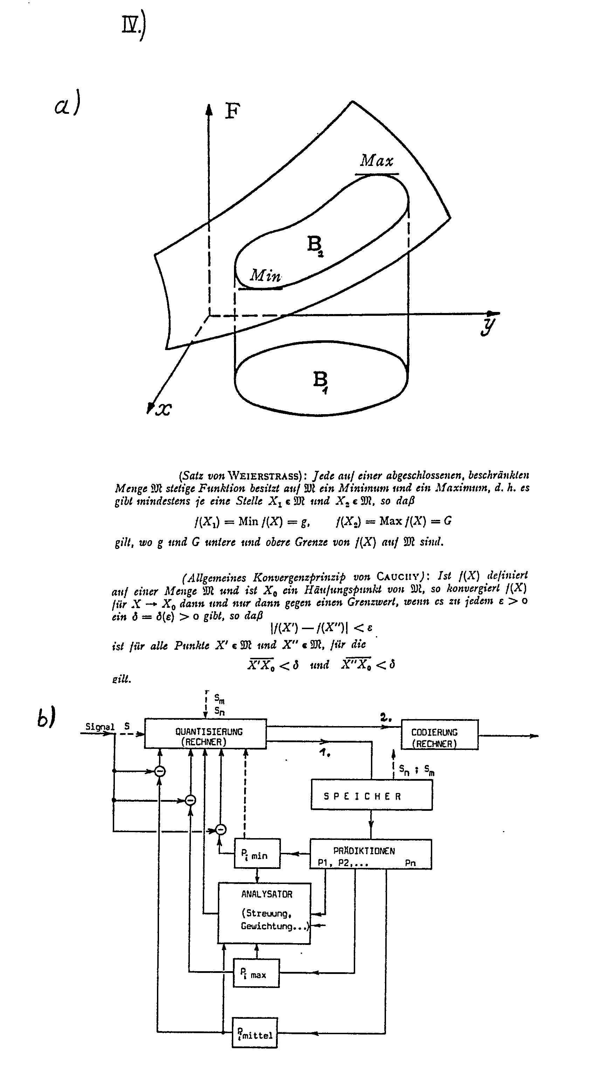

## Ansprüche

1. GENERALISIERT BEREICHSPRÄDIKTIVES CODE-MODULATIONS-VERFAHREN FÜR SIGNALMENGEN

gekennzeichnet durch eine (mehrdimensionale) Reduktion des Adressraums durch einfache und sukzessive Bereichs-Präcodierung (-Prädiktion) und -Codierung nach BESTIMMUNG DER GRENZEN, resultierender ABSOLUTER ODER RELATIVER BEREICHS-. OFFSET-CODIERUNG und/oder SUKZESSIVER FOKUSSIERUNG (unscharf, scharf) der BEREICHE und GRENZEN durch gesteuert zunehmende Codierschärfe, jeweils mittels

a) Bereichs-Schachtelung top-down (KONVERGENZ-PRINZIP VON CAUCHY) und bottom-up, des Funktions-Adressraums, speziell stetiger Fortsetzung an Bereichs-Grenzen.

b) SELEKTION natürlicher Bereiche und deren Grenzen durch RELEVANZ-BESTIMMUNG;

c) (direkter,vergangenheitsgesteuerter,programmierter) Präcodierung der GRENZEN, WEITEN und FORMEN der (auch natürlichen) Signal-Bereiche, incl. INTERPOLATION innerhalb von Bereichs-Grenzen, speziell linearer Interpolation;

h) Nutzung der OBJEKT-BEREICHE und CODELÄNGEN-KORRELATIONEN im Signal-Raum;

d) Signal-Block- und Signal-Differenzen-Block-CODIERUNG;

e) zusätzlicher BEREICHS-ÜBERTRAGUNG;

f) top-down zunehmender Codierschärfe;

g) bottom-up-Korrekturen von prädizierten Bereichen (im Fehlerfall);

i) Nutzung der durch Bereichsgrenzen REDUNDANTEN CODES und- -LÄNGEN;

k) Nutzung dadurch gegebener Möglichkeiten zur CODE-SEGMENTIERUNG und -Verlängerung;

l) Nutzung von sammelbaren (Prä-,Post-)Codes und Mehrfach-Codierungen als ein Code;

m) Nutzung von VEKTOR-CODIERUNG mehrerer Komponenten;

einzeln und kombiniert, und folgenden einzelnen oder kombinierten Merkmalen:

1.1 Feststellung natürlicher GRENZEN (Verallgemeinerung von "EXTREMA") einer Signal-Menge S innerhalb von Signalblöcken, speziell durch Zuordnung zu definierten Mengen (mit: MERKMAL ist true/false) mittels

1.1.1. hierarchischer Block-Schachtelung nach Relevanz-Kriterien;

1.1.2. (Ir-)Relevanz- und Korrelations-Suche über Differenz-Bildungen, resultierende/vorgegebene Code-Längen, Häufungs-Punkte bzw. Dichte-Funktionen, Schwerpunkte, Mittelwerte, Streuung;

1.1.3. Einbeziehung der Codierung identischer (Rand-)Werte in mehreren Bereichen zur Errechnung relativer Offsets zu Stützpunkten und Stützwerten,speziell zu Bereichs-Extrema (stetige Fortsetzung), sowie zur Fehlerkorrektur;

1.1.4. Einbeziehung von in mindestens einer Koordinate bereichsbeschränkten Schätz-Formen, incl. Interpolationen;

1.2. Grob-Codierung ermittelter Grenzen und Bereichs-Weiten speziell zwecks

1.2.1. (sukzessiver) Fein-Codierung ermittelter Grenzen und Bereiche,speziell durch

- hierarchische Codelängen-Präcodierung (-Prädiktion),

- hierarchische (Vektor-)Raum-Codierung einer oder mehrerer Komponenten, speziell durch hierarchische Block-Schachtelung nach Relevanz-Kriterien;

1.3. (sukzessiver) Fein-Codierung des begrenzten Innengebiets durch (Raum-) Schachtelung, speziell mit dadurch beschränkter (amplitudenreduzierter)

1.3.1. Delta-Modulation der eingeschränkten Adress-Bereiche, speziell DPCM;

1.3.2. längenreduzierter PCM-Modulation der eingeschränkten Adress-Bereiche;

1.3.3. Transformations-Codierung (Cosinus-Transformation);

1.3.4. Formschätzung bzw. (nicht-)linearer Interpolation;

1.4. redundante Codierung von Signal-Mengen durch BEREICHSWEISE und PUNKTWEISE (programmiert) ÜBERLAPPENDE CODIERUNG eines

1.4.1. identischen SIGNALBEREICHS in mehreren Bereichen (versetzte Doppelcodierung einer oder mehrerer gleicher Werte, speziell von Blöcken) zur Elimination von Übertragungs-Fehlern oder Codierung des RELATIVEN OFFSETS;

1.4.2. DIFFERENZEN-BEREICHS (BLOCKES) bzw. WERTES, speziell zu Zwecken gem. 1.4.1;

1.4.3. GERIPPES aus (relevanten,extremalen) Stüzwerten, speziell als Checkpoints zur empfangsseitigen (Block-)Synchronisation und Störungs-Elimination;

1.5. Verkleinerung des (absoluten) Funktions-Adressraums durch Ermittlung und Elimination von Mengen durch (sukzessive) INKLUSION/EXKLUSION, speziell als Binär-Codes, speziell über die EXKLUSION (true/false) mittels

-CODIERTER REST-MENGEN (RMC) der Signal-Menge S,

- LEERER REST-MENGEN (RML) der Signal-Menge S, speziell durch

- DOPPEL- und MEHRFACH-PRÄDIKTION für Bereiche, speziell Häufungs-Punkten;

- SINGULARITÄTEN (Störungs-Punkte ohne zum Signal gehörende enge Umgebung)

1.5.1. Codierung der BEREICHS-ZUGEHÖRIGKEIT zu (je zwei) fremden Mengen (M1,M2...);

1.5.2. (IR-)RELEVANZ-SUCHE, welche die Teil-Mengen definiert und eingrenzt, speziell durch gerichtete Differenzen-Bildung (Gradienten);

1.5.3. Messung von ZEIT-KONSTANTEN zwecks Mengen-Zuordnung, speziell Messung einer realen Anstiegsflanke im Vergleich zur systembedingt verfälschten Anstiegs-Flanke im Vergleich zur Übertragungs-Zeitkonstanten (System-Konstante) für einen idealen Anstieg;

1.5.4. ELIMINATION VON RAUSCHEN, speziell zwecks Glättung längs korrelierender Struktur-Linien und Flächen durch Ermittlung von

- CODELÄNGEN-KORRELATIONEN im Raum,

- PUNKT-ZU PUNKT bzw. OBJEKT-KORRELATIONEN;

1.5. ANALOG-VERFAHREN zur sendeseitigen Bereichs-Definition, speziell durch

1.6.1. Extremwert-Bestimmung und nichtbinäre (analoge) Amplituden-Codes,

1.6.2. Differenzen-Bildung, -Differentiation und -Integration,

1.6.3. Kompressions-Verfahren,

1.6.4. Rauschunterdrückung,

einzeln, in Kombination miteinander und hierarchisch mit sich selbst, inclusive (logischer und/oder funktionaler) Inversionen,

2. GENERALISIERT BEREICHSPRÄDIKTIVES CODE-MODULATIONS-VERFAHREN FÜR SIGNALMENGEN mit Bereichs-Schachtelung top-down (KONVERGENZ-PRINZIP von CAUCHY) und bottom-up zur sukzessiv bereichsabhängig schärferen längenreduzierten Codierung des (mehrdimensionalen) Funktions-Adress-Raumes, unter Verwendung der Bereiche von Signalen, Differenzen,Vektoren,Prädikaten,Unschärfen,relativen Offsets und Codelängen-Prädiktion. speziell gemäß Anspruch 1,

dadurch gekennzeichnet, daß ein damit bereichsreduzierter Adressraum (reduzierte maximal mögliche Weite bzw. Amplitude) in jenem (Mehrfach-Kombination) bzw. konventionellen Verfahren zur (sukzessiv) bereichsweise reduzierten CODIERUNG, ÜBERTRAGUNG und DECODIERUNG einer Signal-Menge genutzt wird, speziell bei

2.1. PCM-Verfahren,

2.2. DELTA-MODULATION, speziell DPCM-Verfahren,

2.3. TRANSFORMATIONS-CODIERUNG, speziell der (adaptiven) Cosinus-Transformation,

2.4. RECURSIVE BINARY NESTING, QUAD-TREE und (Raum-, Polygon-) Äquivalente,

2.5. ENTARTUNG von Bereichen (Adress-Räumen) zu solchen erniedrigter Dimension,

inclusive kombinierter bzw. bedingungsgesteuert GESCHALTETER ANWENDUNG sowie beliebige Superpositionen und Kombinationen davon.

3.) GENERALISIERT BEREICHSPRÄDIKTIVES CODE-MODULATIONS-VERFAHREN FÜR SIGNALMENGEN

dadurch gekennzeichnet, daß eine bereichsabhängige Codeminderung zur Signal-Analyse und -Verarbeitung genutzt wird, speziell durch:

3.1 entsprechend programmierte Analyse-Algorithmen (Merkmal-Analysen, Software),

3.2. entsprechend programmierte oder modular aufgebaute Chips (Hardware),

3.3. Automaten (Computer) als Programm oder Hardware,

3.4. Sende- und Empfangs-Systeme, Aufzeichnungs-, Codier-, (Farb-)TV-Systeme,

3.5. WISSENSBASIERTE ANALYSATOREN und -Coder (KI-Systeme).

Ia)

Ib)

Ic)

IIa)

IIb)

MIN/MAX     f(t)

oder

IIc)

Y

X

z

$II d)$

$II e)$

IV.)

a)

(Satz von WEIERSTRASS): *Jede auf einer abgeschlossenen, beschränkten Menge $\mathfrak{M}$ stetige Funktion besitzt auf $\mathfrak{M}$ ein Minimum und ein Maximum, d. h. es gibt mindestens je eine Stelle $X_1 \in \mathfrak{M}$ und $X_2 \in \mathfrak{M}$, so daß*

$$f(X_1) = \mathrm{Min}\, f(X) = g, \qquad f(X_2) = \mathrm{Max}\, f(X) = G$$

*gilt, wo g und G untere und obere Grenze von $f(X)$ auf $\mathfrak{M}$ sind.*

(Allgemeines Konvergenzprinzip von CAUCHY): *Ist $f(X)$ definiert auf einer Menge $\mathfrak{M}$ und ist $X_0$ ein Häufungspunkt von $\mathfrak{M}$, so konvergiert $f(X)$ für $X \to X_0$ dann und nur dann gegen einen Grenzwert, wenn es zu jedem $\varepsilon > 0$ ein $\delta = \delta(\varepsilon) > 0$ gibt, so daß*

$$|f(X') - f(X'')| < \varepsilon$$

*ist für alle Punkte $X' \in \mathfrak{M}$ und $X'' \in \mathfrak{M}$, für die*

$$\overline{X'X_0} < \delta \quad und \quad \overline{X''X_0} < \delta$$

*gilt.*

b)

Europäisches Patentamt

# EUROPÄISCHER RECHERCHENBERICHT

Nummer der Anmeldung

EP 88 11 8365

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 091 979 (KEHLER) <br> * Insgesamt * <br> --- | 1-3 | H 04 N 7/13 <br> H 04 N 7/137 |
| D,A | WO-A-8 604 757 (BRITSH TELECOMMUNICATIONS PUBLIC LTD, CO.) <br> * Figuren 1-9; Seite 1, Zeile 1 - Seite 3, Zeile 4 * <br> --- | 1-3 | |
| A | US-A-4 636 856 (SIEMENS) <br> * Zusammenfassung, Figur 1 * & EP-A-0 141 127 (Kat. D,A) <br> --- | 1,2 | |
| A | SPIE, Band 594, Image Coding, Dezember 1985, Seiten 119-128, Cannes, FR; G. KUMMERFELDT et al.: "Coding television signals at 320 and 64 kbit/s" <br> * Seite 119, Zeilen 1-9; Seite 125, Zeilen 10-43 * <br> --- | 1-3 | |
| A | SYSTEMS & COMPUTERS IN JAPAN, Band 17, Nr. 3, März 1986, Seiten 47-55, Silver Spring, Maryland, US; H. TOMINAGA et al.: "Interframe tri-level differential coding technique on narrow band transmission for video conference system" <br> * Zusammenfassung; Figuren 6-11 * <br> --- | 1-3 | RECHERCHIERTE SACHGEBIETE (Int. Cl.4) <br><br> H 04 N |
| A | IEEE SPECTRUM, Band 4, Nr. 3, März 1967, Seiten 133-139; C.M. KORTMAN: "Data compression by redundancy reduction" <br> * Figuren 1,3,4 * <br> ---        -/- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 23-02-1989 | BOSCH F.M.D. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | INSTITUT DE RECHERCHE D'INFORMATIQUE ET D'AUTOMATIQUE: Reconnaissance des formes et intelligence artificielle, 12.-14. September 1979, Toulouse, Seiten 58-66; J. DEWITTE: "Codage adaptif en MIC différentiel avec critère psychovisuel de qualité" * Insgesamt * --- | 1-3 | |
| A | SYSTEMS & COMPUTERS IN JAPAN, Band 17, Nr. 12, Dezember 1986, Seiten 75-84, Silver Spring, Maryland, US; A. MACHIZAWA et al.: "Image data compression based on interpolative DPCM by area decomposition" * Zusammenfassung * ----- | 1-3 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 23-02-1989 | BOSCH F.M.D. |